(19) Europäisches Patentamt
European Patent Office
Office européen des brevets

(11) EP 3 227 346 B1

(12) **EUROPÄISCHE PATENTSCHRIFT**

(45) Veröffentlichungstag und Bekanntmachung des Hinweises auf die Patenterteilung:
**09.01.2019 Patentblatt 2019/02**

(21) Anmeldenummer: **15798103.6**

(22) Anmeldetag: **23.11.2015**

(51) Int Cl.:
***C08F 2/22*** *(2006.01)* ***C08F 265/06*** *(2006.01)*
***C09D 151/00*** *(2006.01)*

(86) Internationale Anmeldenummer:
**PCT/EP2015/077298**

(87) Internationale Veröffentlichungsnummer:
**WO 2016/087240 (09.06.2016 Gazette 2016/23)**

(54) **BINDEMITTELSYSTEM FÜR HOCHGLÄNZENDE ANSTRICHE**

BINDER SYSTEM FOR HIGH-GLOSS PAINTS

SYSTÈME DE LIANT POUR PEINTURES HAUTE BRILLANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2014 EP 14196160**

(43) Veröffentlichungstag der Anmeldung:
**11.10.2017 Patentblatt 2017/41**

(73) Patentinhaber: **BASF SE**
**67056 Ludwigshafen am Rhein (DE)**

(72) Erfinder:
- **TROMSDORF, Ulrich**
  **68723 Plankstadt (DE)**
- **AL-HELLANI, Rabie**
  **67059 Ludwigshafen (DE)**
- **LUCAS, Frederic**
  **68159 Mannheim (DE)**
- **ROLLER, Sebastian**
  **68167 Mannheim (DE)**

(74) Vertreter: **BASF IP Association**
**BASF SE**
**G-FLP-C006**
**67056 Ludwigshafen (DE)**

(56) Entgegenhaltungen:
**EP-A1- 1 978 043** **WO-A1-2013/174894**
**DE-A1- 4 439 459**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 227 346 B1

## Beschreibung

Gegenstand der vorliegenden Erfindung ist ein Verfahren zur Herstellung einer wässrigen Polymerdispersion durch radikalisch initiierte wässrige Emulsionspolymerisation, welches dadurch gekennzeichnet ist, dass in einem wässrigen Polymerisationsmedium
a) in einer ersten Polymerisationsstufe

| | |
|---|---|
| ≥ 0,1 und ≤ 15 Gew.-% | wenigstens einer α,β-monoethylenisch ungesättigten $C_3$-bis $C_6$-Mono- oder Dicarbonsäure (Monomere A1), |
| ≥ 0,1 und ≤ 40 Gew.-% | wenigstens einer monoethylenisch ungesättigten Verbindung mit wenigstens einer Hydroxygruppe (Monomere B1), |
| ≥ 50 und ≤ 99,8 Gew.-% | wenigstens einer ethylenisch ungesättigten Verbindung, welche sich von den Monomeren A1 und B1 unterscheidet (Monomere C1), |

wobei sich die Mengen der Monomeren A1 bis C1 auf 100 Gew.-% aufsummieren, in Gegenwart mindestens eines Radikalinitiators und mindestens eines Radikalkettenreglers sowie optional in Gegenwart eines Dispergierhilfsmittels polymerisiert werden,
mit der Maßgabe, dass

- die Menge an Radikalkettenregler so gewählt wird, dass das aus der ersten Polymerisationsstufe erhaltene Polymer 1 ein gewichtsmittleres Molekulargewicht im Bereich von ≥ 5000 und ≤ 40000 g/mol aufweist,
- die Art und Mengen der Monomeren A1 bis C1 so gewählt werden, dass das erhaltene Polymer 1 eine Glasübergangstemperatur $Tg^1$ gemessen nach DIN EN ISO 11357-2 (2013-09) im Bereich ≥ 20 °C aufweist, danach in Anwesenheit des Polymers 1

b) in einer zweiten Polymerisationsstufe

| | |
|---|---|
| ≤ 1,0 Gew.-% | wenigstens einer α,β-monoethylenisch ungesättigten $C_3$-bis $C_6$-Mono- oder Dicarbonsäure (Monomere A2), |
| ≥ 0,1 und ≤ 40 Gew.-% | wenigstens einer monoethylenisch ungesättigten Verbindung mit wenigstens einer Hydroxygruppe(Monomere B2), |
| ≥ 60 und ≤ 99,9 Gew.-% | wenigstens einer ethylenisch ungesättigten Verbindung, welche sich von den Monomeren A2 und B2 unterscheidet (Monomere C2), |

wobei sich die Mengen der Monomeren A2 bis C2 auf 100 Gew.-% aufsummieren, in Gegenwart mindestens eines Radikalinitiators und mindestens eines Radikalkettenreglers sowie optional in Gegenwart eines Dispergierhilfsmittels polymerisiert werden,
mit der Maßgabe, dass

- das Gewichtsverhältnis der Summe der Gesamtmengen an Monomeren A1 bis C1 (Gesamtmonomerenmenge 1) zur Summe der Gesamtmengen an Monomeren A2 bis C2 (Gesamtmonomerenmenge 2) im Bereich 5:95 bis 70:30 liegt,
- die Menge an Radkialkettenregler in der zweiten Polymerisationsstufe so gewählt wird, dass das nach der zweiten Polymerisationsstufe erhaltene Gesamtpolymer ein gewichtsmittleres Molekulargewicht ≤ 75000 g/mol aufweist, und
- die Menge des Dispergierhilfsmittels ≤ 3,0 Gew.-%, bezogen auf die Summe an Gesamtmonomerenmenge 1 und Gesamtmonomerenmenge 2 (Gesamtmonomerenmenge), beträgt.

Ferner betrifft die vorliegende Erfindung die wässrige Polymerisatdispersion selbst sowie deren Verwendung in unterschiedlichsten Anwendungsgebieten, insbesondere zur Herstellung hochglänzender Beschichtungsformulierungen.
Für die vorliegende Erfindung ist von folgendem Stand der Technik auszugehen.
So offenbart die WO 2011/073341 eine wässrige Polymerisatdispersion eines wenigstens zweistufigen Dispersionspolymerisats für Beschichtungsanwendungen, dessen erste Stufe mindestens ein Hydroxy(meth)acrylat enthält, dessen Hydroxyzahl ≥ 2 mg KOH/g Polymer und dessen Säurezahl nicht mehr als 10 mg KOH/g Polymer beträgt.
Die WO 2011/080067 beschreibt eine wässrige Polymerisatdispersion eines wenigstens zweistufigen Dispersionspolymerisats für Ein- oder Zweikomponenten-Beschichtungsanwendungen, dessen Polymerisat der ersten Stufe wenigstens ein Hydroxy(meth)acrylat enthält, dessen Hydroxyzahl ≥ 2 mg KOH/g Polymer und dessen Säurezahl nicht mehr als 10 mg KOH/g Polymer beträgt.

In der WO 2012/130712 wird zweistufiges Emulsionspolymerisat offenbart, wobei das dispergierte Polymerisat der ersten Polymerisationsstufe eine Glasübergangstemperatur von > 50 °C und ein gewichtsmittleres Molekulargewicht von 5 bis 100 kDa aufweist und mindestens eine Carbonsäure sowie mindestens ein weiteres Spezialmonomer enthält.

Die WO 2012/140042 beschreibt zweistufige Emulsionspolymerisate, welche aus einer hydroplastifizierbaren säurereichen ersten Polymerisationsstufe mit einer Glasübergangstemperatur im Bereich von 10 bis 125 °C und einer zweiten säureärmeren Polymerisationsstufe mit einer Säurezahl von maximal 23 mg KOH/g Polymer aufgebaut sind.

Gemäß der EP-A 2371870 werden zweistufige Emulsionpolymerisate offenbart, wobei das Polymerisat der ersten Polymerisationsstufe einen Gewichtsanteil von 10 bis 30 Gew.-% (bezogen auf das Gesamtpolymer), ein zahlenmittleres Molekulargewichts im Bereich von 1000 bis 4500 g/mol und einer Säurezahl von 5 bis 100 mg KOH/g Polymer aufweist. Dagegen weist das Polymerisat der zweiten Polymerisationsstufe eine Säurezahl auf, welche maximal halb so groß ist wie die Säurezahl des Polymerisats der ersten Polymerisationsstufe. Das zahlenmittlere Molekulargewicht des zweiten Polymerisats soll > 20000 g/mol betragen.

Demgegenüber offenbart die EP-A 1978043 ein Mehrstufenemulsionspolymerisat, das aus einer säurenreichen ersten Polymerisat mit einer Säurezahl von 10 bis 100 mg KOH/g Polymer besteht, wobei die Säuregruppen neutralisiert werden. Das Polymerisat der zweiten Polymerisationsstufe weist eine Säurezahl < 5 mg KOH/g Polymer, eine Hydroxyzahl < 5 mg KOH/g Polymer auf und enthält 0,5 bis 5 Gew.-% eines mehrfach ungesättigten Monomers in einpolymerisierter Form.

Die nicht vorveröffentlichte Patentanmeldung, basierend auf der europäischen Prioritätsanmeldung mit der Anmeldenummer 14175337.6 betrifft wässrige Polymerisatdispersionen zur Verwendung in ein- oder zweikomponentigen Korrosionsschutzbeschichtungen, welche dadurch charakterisiert sind, dass sowohl die Polymere der ersten wie auch der zweiten Polymerisationsstufe eine Säurezahl ≤ 10 mg KOH/g Polymer und eine Hydroxyzahl ≤ 1 mg KOH/g Polymer aufweisen.

Aufgabe der vorliegenden Erfindung war es, Polymerdispersionen für Beschichtungsmassen zur Verfügung zu stellen, die in der Herstellung möglichst ohne oder lediglich mit einer geringen Menge an Dispergierhilfsmittel auskommen und zu Beschichtungen mit einem verbesserten Glanzverhalten sowie einer geringeren Trübung führen.

Die Aufgabe wurde durch die gemäß dem eingangs definierten Verfahren zugänglichen wässrigen Polymerdispersionen gelöst.

Die Durchführung von radikalisch initiierten Emulsionspolymerisationen von ethylenisch ungesättigten Verbindungen (Monomere) in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die Monomere, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise schaum- oder viskositätsmodifizierende Additive zugesetzt. Von dieser allgemeinen Verfahrensweise unterscheidet sich das erfindungsgemäße Verfahren lediglich dadurch, dass es zweistufig unter Einhaltung der genannten Rahmenparameter durchgeführt wird.

Zur Herstellung der mit dem erfindungsgemäßen Verfahren zugänglichen wässrigen Polymerdispersionen durch zweistufige wässrige Emulsionspolymerisation können nachfolgende ethylenisch ungesättigte Monomere A1, A2, B1, B2 sowie C1 und C2 eingesetzt werden:

Als Monomere A1 und A2 kommen alle α,β-monoethylenisch ungesättigten $C_3$- bis $C_6$-, bevorzugt $C_3$- oder $C_4$-Mono- oder Dicarbonsäuren in Betracht, wie beispielsweise Acrylsäure, Methacrylsäure, Ethylacrylsäure, Itaconsäure, Allylessigsäure, Crotonsäure, Vinylessigsäure, Fumarsäure, Maleinsäure, 2-Methylmaleinsäure. Die Monomeren A1 und A2 umfassen aber auch die Anhydride entsprechender α,β-monoethylenisch ungesättigter Dicarbonsäuren, wie beispielsweise Maleinsäureanhydrid oder 2-Methylmaleinsäureanhydrid. Bevorzugt sind die Monomeren A 1 und A2 ausgewählt aus der Gruppe umfassend Acrylsäure, Methacrylsäure, Crotonsäure, Fumarsäure, Maleinsäure, 2-Methylmaleinsäure und Itaconsäure, wobei Acrylsäure und/oder Methacrylsäure besonders bevorzugt sind. Selbstverständlich umfassen

die Monomeren A1 und A2 auch die voll- oder teilneutralisierten wasserlöslichen Salze, insbesondere die Alkalimetall- oder Ammoniumsalze, der vorgenannten Säuren.

Als Monomere B1 und B2 kommen alle monoethylenisch ungesättigten Verbindungen mit wenigstens einer Hydroxygruppe, wie insbesondere alle Hydroxyalkyl-, vorteilhaft Hydroxy-$C_2$-$C_{10}$-alkyl-, bevorzugt Hydroxy-$C_2$-$C_4$-alkyl- und besonders vorteilhaft Hydroxy-$C_2$-$C_3$-alkylacrylate und/oder -methacrylate in Betracht, wobei im Rahmen dieser Schrift auch die alkoxylierten, d.h. die mit Alkylenoxiden (im wesentlichen Ethylenoxid und Propylenoxid) umgesetzten Hydroxyalkylacrylate und/oder -methacrylate als Monomere B1 und B2 angesehen werden sollen. Mit Vorteil ist das hydroxyalkylgruppenhaltige Monomere B1 und B2 ausgewählt aus der Gruppe umfassend Diethylenglykolmonoacrylat, 4-Hydroxybutylacrylat, 3-Hydroxypropylacrylat, 2-Hydroxypropylacrylat, 2-Hydroxyethylacrylat, Diethylenglykolmonomethacrylat, 4-Hydroxybutylmethacrylat, 3-Hydroxypropylmethacrylat, 2-Hydroxypropylmethacrylat und 2-Hydroxyethylmethacrylat. Insbesondere vorteilhaft wird 2-Hydroxyethylacrylat und/oder 2-Hydroxyethylmethacrylat eingesetzt, wobei 2-Hydroxyethylmethacrylat besonders bevorzugt ist.

Die Monomeren B1 und B2 sollen auch solche Hydroxyalkylacrylate und -methacrylate umfassen, die mehr als eine Hydroxygruppe aufweisen, beispielsweise zwei bis fünf, bevorzugt zwei bis vier, besonders bevorzugt zwei bis drei Hydroxygruppen. Beispiele dafür sind Glycerinmonoacrylat und -methacrylat, Trimethylolpropanmonoacrylat und -methacrylat, Pentaerythritmonoacrylat und -methacrylat sowie Monoacrylate und -methacrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit und Isomalt.

Als Monomere C1 und C2 kommen prinzipiell alle ethylenisch ungesättigten Verbindungen in Betracht, welche sich von den Monomeren A1, A2, B1 und B2 unterscheiden, wie (Meth)acrylsäurealkylester, wobei bevorzugt solche (Meth)acrylsäurealkylester umfasst sein sollen, deren linearer oder verzweigter Alkylrest 1 bis 20 Kohlenstoffatome aufweist, besonders bevorzugt 1 bis 10, ganz besonders bevorzugt 1 bis 8 und insbesondere 1 bis 4 Kohlenstoffatome. Von Bedeutung in diesem Zusammenhang ist, dass die Schreibweise ("Meth)acrylsäure"verbindungen bzw. "(Meth)acrylat"verbindungen generell sowohl die entsprechenden Acrylsäureverbindungen wie auch die entsprechenden Methacrylsäureverbindungen umfassen soll.

Zu nennen als Beispiele für (Meth)acrylsäurealkylester sind (Meth)acrylsäuremethylester, (Meth)acrylsäureethylester, (Meth)acrylsäure-n-propylester, (Meth)acrylsäure-n-butylester, (Meth)acrylsäure-iso-butylester, (Meth)acrylsäure-sek-butylester, (Meth)acrylsäure-n-pentylester, (Meth)acrylsäure-iso-pentylester, (Meth)acrylsäure-2-methyl-butylester, (Meth)acrylsäureamylester, (Meth)acrylsäure-n-hexylester, (Meth)acrylsäure-2-ethylbutylester, (Meth)acrylsäurepentylester, (Meth)acrylsäure-n-heptylester, (Meth)acrylsäure-n-octylester, (Meth)acrylsäure-2-ethylhexylester, (Meth)acrylsäure-2-propylheptylester, (Meth)acrylsäure-n-decylester, (Meth)acrylsäureundecylester und/oder (Meth)acrylsäure-n-dodecylester.

Als (Meth)acrylsäurealkylester bevorzugt sind Methylmethacrylat, Methylacrylat, Ethylacrylat, n-Butylacrylat, n-Hexylacrylat, n-Octylacrylat, 2-Ethylhexylacrylat und/oder 3-Propylheptylacrylat.

Als Monomere C1 und C2 kommen auch Vinylaromaten mit bis zu 20 C-Atomen in Betracht.

Bei den Vinylaromaten mit bis zu 20 C-Atomen handelt es sich um optional substituierte aromatische Systeme mit einer Vinylgruppe, die sich in Konjugation zum aromatischen Ringsystem befindet.

Solche substituierten Vinylaromaten weisen häufig eine oder mehrere, bevorzugt eine 1 bis 10 Kohlenstoffatome, oft 1 bis 6 und bevorzugt 1 bis 4 Kohlenstoffatome aufweisende lineare oder verzweigte Alkylgruppen auf, die sich am Aromaten oder an der Vinylgruppe befinden kann. Befindet sich der Substituent am Aromaten, so kann sich der Substituent bevorzugt in ortho- oder para-Position, besonders bevorzugt in para-Position zur Vinylgruppe befinden.

Als vinylaromatische Verbindungen kommen insbesondere Vinyltoluol, Vinylnaphthalin, $\alpha$- und p-Methylstyrol, $\alpha$-Butylstyrol, 4-n-Butylstyrol, 4-n-Decylstyrol und/oder Styrol in Betracht, wobei jedoch Styrol und/oder $\alpha$-Methylstyrol besonders bevorzugt sind.

Die Monomeren C1 und C2 umfassen aber auch ethylenisch ungesättigte Nitrile mit bis zu 20 C-Atomen, wie insbesondere Fumarsäuredinitril, Acrylnitril und Methacrylnitril, bevorzugt Acrylnitril und Methacrylnitril und besonders bevorzugt Acrylnitril, Vinylester von bis zu 20 C-Atome enthaltenden Carbonsäuren, wie insbesondere Vinyllaurat, Vinylstearat, Vinylpropionat, Versaticsäurevinylester, Vinylbutyrat und Vinylacetat, bevorzugt jedoch Vinylacetat, Vinyl- und Vinylidenhalogenide mit bis zu 10 C-Atomen, wie insbesondere mit Chlor, Fluor oder Brom substituierte ethylenisch ungesättigte Verbindungen, bevorzugt Vinylchlorid und Vinylidenchlorid und Vinylether von 1 bis 10 C-Atome enthaltenden Alkoholen, wie vorteilhaft Methylvinylether, Ethylvinylether, n-Propylvinylether, iso-Propylvinylether, n-Butylvinylether, sek-Butylvinylether, iso-Butylvinylether, tert-Butylvinylether und n-Octylvinylether, wobei Vinylether von 1 bis 4 C-Atome enthaltenden Alkoholen bevorzugt sind.

In untergeordnetem Maße, d.h. $\leq$ 20 Gew.-%, vorteilhaft $\leq$ 10 Gew.-% und insbesondere vorteilhaft $\leq$ 5 Gew.-%, jeweils bezogen auf die Gesamtmenge der Monomeren C1 bzw. C2, können die Monomeren C1 und C2 auch die nachfolgenden, funktionalisierten ethylenisch ungesättigten Monomere umfassen:

Organische Verbindungen, welche wenigstens zwei nicht konjugierte ethylenisch ungesättigte Gruppen aufweisen, Di- und Poly(meth)acrylate, 1,2-, 1,3- und 1,4-Butandioldiacrylat, 1,2- und 1,3-Propylenglykol(meth)acrylat, 1,6-Hexandioldi(meth)acrylat, 1,2-Ethylenglykoldi(meth)acrylat, Neopentylglykoldi(meth)acrylat, Diethylenglykoldi(meth)acrylat, Triethylenglykoldi(meth)acrylat, Tetraethylenglykoldi(meth)acrylat, Trimethylolpropantri(meth)acrylat, Trimethylolethantri(meth)acrylat, Pentaerythritoltri- und -tetra(meth)acrylat, 1,2-, 1,3- und 1,4-Divinylbenzol sowie Mischungen davon. Besonders bevorzugt sind die Verbindungen ausgewählt aus der Gruppe bestehend aus Divinylbenzol, 1,4-Butandioldiacrylat und Allylmethacrylat.

Weitere erfindungsgemäß einsetzbare funtkionalisierte ethylenisch ungesättigte Verbindungen sind ausgewählt aus der Gruppe bestehend aus (Meth)acrylsäure-2-(2-oxo-imidazolidin-1-yl)-ethylester (Ureidoethyl(meth)acrylat), N-[2-(2-oxo-oxazolidin-3-yl)-ethyl]-methacrylat, Acetoacetoxyethylacrylat, Acetoacetoxypropylmethacrylat, Acetoacetoxybutylmethacrylat, 2-(Acetoacetoxy)ethylmethacrylat, Diacetonacrylamid (DAAM) und Diacetonmethacrylamid. Bevorzugt in dieser Gruppe sind (Meth)acrylsäure-2-(2-oxo-imidazolidin-1-yl)-ethylester, (Acetoacetoxy)ethylmethacrylat, Diacetonacrylamid und/oder Diacetonmethacrylamid, besonders bevorzugt sind (Meth)acrylsäure-2-(2-oxo-imidazolidin-1-yl)-ethylester und (Acetoacetoxy)ethylmethacrylat.

Zu den erfindungsgemäß einsetzbaren funtkionalisierten ethylenisch ungesättigten Verbindungen zählen auch Verbindungen mit einer (Meth)acrylat- und einer Epoxygruppe. Insbesondere zu erwähnen sind Glycidylacrylat und Glycidylmethacrylat, bevorzugt Glycidylmethacrylat.

Ferner zählen zu den erfindungsgemäß einsetzbaren funktionalisierten ethylenisch ungesättigten Verbindungen um $\alpha,\beta$-ethylenisch ungesättigte Carbonsäureamide, bevorzugt um die Amide der Monomeren A1 und A2, wobei (Meth)acrylsäureamid, Crotonsäureamid oder Amide von Dicarbonsäuren, z.B. Itaconsäurediamid, Maleinsäurediamid oder Fumarsäurediamid bevorzugt sind. Besonders bevorzugt sind Methacrylsäureamid und/oder Acrylsäureamid, wobei Acrylsäureamid ganz besonders bevorzugt ist.

Erfindungsgemäß von Bedeutung ist es, dass die vorgenannten Monomeren A1 bzw. A2, B1 bzw. B2 sowie C1 bzw. C2 einzeln oder auch als Gemische eingesetzt werden. Von den Monomeren A1 bis C1 bzw. A2 bis C2 können jeweils die Gesamt- bzw. Teilmengen im wässrigen Polymerisationsmedium vor Initiierung der Polymerisationsreaktion vorgelegt und die gegebenenfalls verbliebenen Teilmengen unter Polymerisationsbedingungen zudosiert werden. Es ist jedoch auch möglich, die Gesamtmengen der Monomeren A1 bis C1 bzw. A2 bis C2 dem wässrigen Polymerisationsmedium unter Polymerisationsbedingungen zuzudosieren. Mit Vorteil wird in der ersten Polymerisationsstufe wenigstens eine Teilmenge $\leq$ 10 Gew.-% der Monomeren A1 bis C1 im wässrigen Polymerisationsmedium vor Initiierung der Polymerisationsreaktion vorgelegt und die verbliebene Restmenge dem wässrigen Polymerisationsmedium unter Polymerisationsbedingungen zudosiert, während in der zweiten Polymerisationsstufe die Gesamtmenge der Monomeren A2 bis C2 dem wässrigen Polymerisationsmedium unter Polymerisationsbedingungen zudosiert werden. Dabei können die Monomeren A1 bis C1 bzw. A2 bis C2 dem wässrigen Polymerisationsmedium jeweils in Einzelströmen, als Monomerengemisch oder in Form einer wässrigen Monomerenemulsion diskontinuierlich, sowie kontinuierlich mit gleichbleibenden oder sich ändernden Mengenströmen zudosiert werden.

Mit besonderem Vorteil werden die Monomeren der ersten und der zweiten Polymerisationsstufe jedoch jeweils als Monomerengemische eingesetzt. Vorteilhaft wird wenigstens ein Teil der Monomerengemische der ersten und der zweiten Polymerisationsstufe dem wässrigen Polymeriationsmedium unter Polymerisationsbedingungen zudosiert.

Die radikalisch initiierte wässrige Emulsionspolymerisation zur Herstellung der Dispersionspolymerisate wird in der Regel in Gegenwart von 0,1 bis 5 Gew.-%, vorzugsweise 0,1 bis 4 Gew.-% und insbesondere 0,1 bis 3 Gew.-%, jeweils bezogen auf die Gesamtmonomerenmenge (entsprechend der Summe von Gesamtmonomerenmenge 1 und Gesamtmonomerenmenge 2), eines radikalischen Polymerisationsinitiators (Radikalinitiator) durchgeführt. Als Radikalinitiatoren kommen alle diejenigen in Betracht, die in der Lage sind, eine radikalische wässrige Emulsionspolymerisation zu initiieren. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im Wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Selbstverständlich können auch sogenannte Redoxinitiatorensysteme als Radikalinitiatoren eingesetzt werden. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatischer Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Unter Initiierung der Polymerisationsreaktion wird der Start der Polymerisationsreaktion der im Polymerisationsgefäß vorliegenden Monomeren nach Radikalbildung des Radikalinitiators verstanden. Dabei kann die Initiierung der Polymerisationsreaktion durch Zugabe von Radikalinitiator zum wässrigen Polymerisationsgemisch im Polymerisationsgefäß unter Polymerisationsbedingungen erfolgen. Es ist aber auch möglich, dass eine Teil- oder die Gesamtmenge des Radikalinitiators dem die vorgelegten Monomeren enthaltenden wässrigen Polymerisationsgemisch im Polymerisationsgefäß unter Bedingungen, welche nicht geeignet sind eine Polymerisationsreaktion auszulösen, beispielsweise bei tiefer Temperatur, zugegeben werden und danach im wässrigen Polymerisationsgemisch Polymerisationsbedingungen eingestellt werden. Unter Polymerisationsbedingungen sind dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, die Polymerisationstemperatur und der Polymerisationsdruck so ausgewählt, dass der Radikalinitiator eine Halbwertszeit < 3 Stunden und insbesondere vorteilhaft < 1 Stunde aufweist und dabei immer genügend Startradikale zur Verfügung stehen, um die Polymerisationsreaktion zu initiieren und aufrechtzuerhalten.

Als Reaktionstemperatur für die radikalisch initiierte wässrige Emulsionspolymerisation kommt der gesamte Bereich von 0 bis 170 °C in Betracht. Dabei werden in der Regel Temperaturen von 50 bis 120 °C, bevorzugt 60 bis 110 °C und insbesondere bevorzugt 60 bis 100 °C angewendet. Die radikalisch initiierte wässrige Emulsionspolymerisation kann bei einem Druck kleiner, gleich oder größer 1 atm [1,013 bar (absolut), Atmosphärendruck] durchgeführt werden, so dass die Polymerisationstemperatur 100 °C übersteigen und bis zu 170 °C betragen kann. Bei Anwesenheit von Monomeren A1 bis C2 mit einem niedrigen Siedepunkt wird die Emulsionspolymerisation vorzugsweise unter erhöhtem Druck durchgeführt. Dabei kann der Druck 1,2, 1,5, 2, 5, 10, 15 bar (absolut) oder noch höhere Werte einnehmen. Wird die Emulsionspolymerisation im Unterdruck durchgeführt, werden Drücke von 950 mbar, häufig von 900 mbar und oft 850 mbar (absolut) eingestellt. Vorteilhaft wird die radikalische wässrige Emulsionspolymerisation bei 1 atm unter Sauerstoffausschluss, insbesondere unter Inertgasatmosphäre, wie beispielsweise unter Stickstoff oder Argon durchgeführt.

Erfindungsgemäß kann die Gesamtmenge des Radikalinitiators im wässrigen Reaktionsmedium vor Initiierung der Polymerisationsreaktion vorgelegt werden. Es ist aber auch möglich, gegebenenfalls lediglich eine Teilmenge des Radikalinitiators im wässrigen Reaktionsmedium vor Initiierung der Polymerisationsreaktion vorzulegen und dann unter Polymerisationsbedingungen während der radikalisch initiierten Emulsionspolymerisation die Gesamtmenge bzw. die gegebenenfalls verbliebene Restmenge in der ersten und/oder zweiten Polymerisationsstufe nach Maßgabe des Verbrauchs kontinuierlich oder diskontinuierlich zuzugeben. Selbstverständlich können in der ersten und in der zweiten Polymerisationsstufe unterschiedliche Radikalinitiatoren in unterschiedlichen Mengen eingesetzt werden. In einer bevorzugten Ausführungsform wird die Gesamtmenge des Radikalinitiators im wässrigen Reaktionsmedium vor Initiierung der Polymerisationsreaktion vorgelegt.

In der Regel beträgt die Gesamtmenge an Radikalinitiatoren $\geq$ 0,05 und $\leq$ 5 Gew.-%, bevorzugt $\geq$ 0,1 und $\leq$ 3 Gew.-% und besonders bevorzugt $\geq$ 0,1 und $\leq$ 1,5 Gew.-%, jeweils bezogen auf die Gesamtmonomerenmenge.

Zur Einstellung der gewichtsmittleren Molekulargewichte der in der ersten und in der zweiten Polymerisationsstufe gebildeten Polymere werden radikalkettenübertragende Verbindungen (Radikalkettenregler) eingesetzt. Dabei kommen im Wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, Mercaptoalkansäure und deren Derivate, wie 3-Mercaptopropionsäure-6-methylheptylester oder 2-Mercaptoethansäure-2-ethylhexylester sowie alle weiteren im Polymerhandbook 3rd edtition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter Radikalkettenregler einzusetzen.

Erfindungsgemäß kann die Gesamtmenge des Radikalkettenreglers im wässrigen Reaktionsmedium vor Initiierung der Polymerisationsreaktion vorgelegt werden. Es ist aber auch möglich, gegebenenfalls lediglich eine Teilmenge des Radikalkettenreglers im wässrigen Reaktionsmedium vor Initiierung der Polymerisationsreaktion vorzulegen und

dann unter Polymerisationsbedingungen während der radikalisch initiierten Emulsionspolymerisation die Gesamtmenge bzw. die gegebenenfalls verbliebene Restmenge in der ersten und/oder zweiten Polymerisationsstufe nach Bedarf kontinuierlich oder diskontinuierlich zuzugeben. Selbstverständlich können in der ersten und in der zweiten Polymerisationsstufe unterschiedliche Radikalkettenregler in unterschiedlichen Mengen eingesetzt werden. Wesentlich ist jedoch, dass die Art und die Mengen der Radikalkettenregler in der ersten und in der zweiten Polymerisationsstufe so gewählt werden, dass die angegebenen gewichtsmittleren Molekulargewichte erhalten werden.

In der Regel beträgt die Menge an Radikalkettenregler in der ersten Polymerisationsstufe ≥ 0,1 und ≤ 20 Gew.-%, bevorzugt ≥ 0,5 und ≤ 10 Gew.-% und besonders bevorzugt ≥ 1,0 und ≤ 7,5 Gew.-%, jeweils bezogen auf die Gesamtmonomerenmenge 1 und in der zweiten Polymerisationssufe ≥ 0,1 und ≤ 10 Gew.-%, bevorzugt ≥ 0,1 und ≤ 5,0 Gew.-% und besonders bevorzugt ≥ 0,1 und ≤ 2,0 Gew.-%, jeweils bezogen auf die Gesamtmonomerenmenge 2.

Optional kann das erfindungsgemäße Verfahren auch in Anwesenheit von Dispergierhilfsmitteln durchgeführt werden, welche sowohl die Monomerentröpfchen als auch Polymerisatteilchen in der wässrigen Phase dispers verteilt halten und so die Stabilität der erzeugten wässrigen Dispersionen der Dispersionspolymerisate gewährleisten. Als solche kommen sowohl die zur Durchführung von radikalischen wässrigen Emulsionspolymerisationen üblicherweise eingesetzten Schutzkolloide wie auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961. Selbstverständlich können auch Gemische aus Emulgatoren und/oder Schutzkolloiden verwendet werden. Vorzugsweise werden als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Gebräuchliche Emulgatoren sind z.B. ethoxilierte Mono-, Di- und Tri-Alkylphenole (EO-Grad: 3 bis 50, Alkylrest: C4 bis C12), ethoxilierte Fettalkohole (EO-Grad: 3 bis 50; Alkylrest: C8 bis C36) sowie Alkalimetall- und Ammoniumsalze von Alkylsulfaten (Alkylrest: C8 bis C12), von Schwefelsäurehalbestern ethoxylierter Alkanole (EO-Grad: 4 bis 30, Alkylrest: C12 bis C18) und ethoxilierter Alkylphenole (EO-Grad: 3 bis 50, Alkylrest: C4 bis C12), von Alkylsulfonsäuren (Alkylrest: C12 bis C18) und von Alkylarylsulfonsäuren (Alkylrest: C9 bis C18). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel I

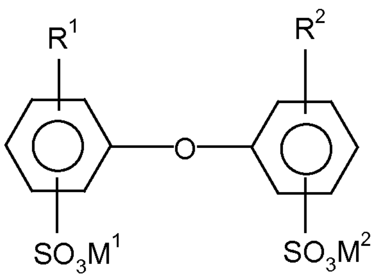

(I) ,

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen (I), in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z.B. aus US-A 4269749, und im Handel erhältlich.

Werden erfindungsgemäß Dispergierhilfsmittel eingesetzt, so finden vorteilhaft anionische und/oder nichtionische und insbesondere vorteilhaft anionische Tenside Verwendung.

In einer spezifischen Ausführungsform der vorliegenden Erfindung werden als Emulgatoren solche eingesetzt, die bei der radikalischen Emulsionspolymerisation in das Polymer eingebaut werden. Dabei handelt es sich in der Regel um Verbindungen, die mindestens eine radikalisch polymerisierbare Gruppe tragen, bevorzugt ausgewählt aus der

Gruppe bestehend aus Allyl, Acrylat, Methacrlyat und Vinylether, und mindestens einer emulgierend wirkenden Gruppe, bevorzugt ausgewählt aus der oben angegebenen Gruppe.

Dies sind beispielsweise einbaubare Emulgatoren der Marken Bisomer® MPEG 350 MA der Firma Laporte, Hitenol® BC-20 (APEO), Hitenol® BC-2020, Hitenol® KH-10 oder Noigen® RN-50 (APEO) der Firma Dai-Ichi Kogyo Seiyaku Co., Ltd., Maxemul® 6106, Maxemul® 6112, Maxemul® 5010, Maxemul® 5011 der Firma Croda, Sipomer® PAM 100, Sipomer® PAM 200, Sipomer® PAM 300, Sipomer® PAM 4000, Sipomer® PAM 5000 der Firma Rhodia, Adeka® Reasoap® PP-70, Adeka® Reasoap® NE-10, Adeka® Reasoap® NE-20, Adeka® Reasoap® NE-30, Adeka® Reasoap® NE-40, Adeka® Reasoap® SE-10N, Adeka® Reasoap® SE-1025A, Adeka® Reasoap® SR-10, Adeka® Reasoap® SR-1025, Adeka® Reasoap® SR-20, Adeka® Reasoap® ER-10, Adeka® Reasoap® ER-20, Adeka® Reasoap® ER-30, Adeka® Reasoap® ER-40 der Firma Adeka, Pluriol® A 010 R, Pluriol® A 12 R, Pluriol® A 23 R, Pluriol® A 46 R, Pluriol® A 750 R, Pluriol® A 950 R, Pluriol® A 590 I, Pluriol® A 1190 I, Pluriol® A 590 V, Pluriol® A 1190 V, Pluriol® A 5890 V, Pluriol® A 308 R und DAA ES 8761 der Firma BASF SE, Latemul® S 180 A und Latemul® S 180 der Firma Kao, Eleminol® JS-2 der Firma Sanyou Kasei, Aquaron® HS-1025 der Firma Daiichi Kogyou Seiyaku sowie C12-AMPS der Firma Lubrizol.

Verfahrenswesentlich ist jedoch, dass die Menge an optional eingesetzten Dispergierhilfsmitteln ≤ 3 Gew.-%, vorteilhaft ≤ 1 Gew.-% und insbesondere vorteilhaft ≥ 0,3 und ≤ 0,7 Gew.-%, jeweils bezogen auf Gesamtmonomerenmenge beträgt. Selbstverständlich kann das erfindungsgemäße Verfahren jedoch auch in Abwesenheit von Dispergiermitteln durchgeführt werden.

Erfindungsgemäß kann die Gesamtmenge des optional eingesetzten Dispergierhilfsmittels im wässrigen Reaktionsmedium vor Initiierung der Polymerisationsreaktion vorgelegt werden. Es ist aber auch möglich, gegebenenfalls lediglich eine Teilmenge des Dispergierhilfsmittels im wässrigen Reaktionsmedium vor Initiierung der Polymerisationsreaktion vorzulegen und dann unter Polymerisationsbedingungen während der radikalisch initiierten Emulsionspolymerisation die Gesamtmenge bzw. die gegebenenfalls verbliebene Restmenge in der ersten und/oder zweiten Polymerisationsstufe nach Bedarf kontinuierlich oder diskontinuierlich zuzugeben. Selbstverständlich können in der ersten und in der zweiten Polymerisationsstufe unterschiedliche Dispergierhilfsmittel in unterschiedlichen Mengen eingesetzt werden. Mit Vorteil wird eine Teilmenge (≤ 50 Gew.-%) der Dispergierhilfsmittel im Reaktionsgefäß vorgelegt und die verbleibenden Restmengen (≥ 50 Gew.-%) in der ersten und in der zweiten Polymerisationsstufe kontinuierlich zudosiert.

In der Regel beträgt die Menge an Dispergierhilfsmitteln in der ersten Polymerisationsstufe ≥ 0,05 und ≤ 5,0 Gew.-%, bevorzugt ≥ 0,1 und ≤ 2,5 Gew.-% und besonders bevorzugt ≥ 0,3 und ≤ 2,0 Gew.-%, jeweils bezogen auf die Gesamtmonomerenmenge 1 und in der zweiten Polymerisationssufe ≥ 0,05 und ≤ 1,0 Gew.-%, bevorzugt ≥ 0,1 und ≤ 0,7 Gew.-% und besonders bevorzugt ≥ 0,1 und ≤ 0,5 Gew.-%, jeweils bezogen auf die Gesamtmonomerenmenge 2.

Von Bedeutung ist, dass das erfindungsgemäße Verfahren in der ersten und/oder zweiten Polymerisationsstufe vorteilhaft in Anwesenheit eines organischen Lösungsmittels mit einer Verdunstungszahl ≥ 20, vorteilhaft ≥ 25 und ≤ 500 und insbesondere vorteilhaft ≥ 30 und ≤ 200, bestimmt nach DIN 53170 (2009-08) durchgeführt wird. Als Lösungsmittel geeignet sind sowohl wasserlösliche wie auch wasserunlösliche organische Lösungsmittel, wie beispielsweise aromatische Kohlenwasserstoffe, wie Solventnaphtha oder Gemische von aromatischen Kohlenwasserstoffen, wie sie beispielsweise als Solvesso® 100, 150 oder 200 vertrieben werden, Ester von niedermolekularen Carbonsäuren, wie Methylglykolacetat, Ethylglykolacetat, Methoxypropylacetat, 2,2,4-Trimethyl-1,3-pentandiol-monoisobutyrat (Texanol® der Firma Eastman), Dipropylenglykolmonomethyletheracetat, Propylenglykolmonoethyletheracetat, Propylenglykolmonomethyletheracetat, Ether wie Butylglykol, Dioxan, Ethylglykolether, Diethylenglykolmonoethylether, Diethylenglykolmonomethylether, Diethylenglykol mono-n-butylether, Diethylenglykolmono-n-hexylether, Diethylenglykoldiethylether, Diethylenglykoldimethylether, Diethylenglykoldi-n-butylether, Diethylenglykoldi-n-hexylether, Ethylenglykol-di-2-ethylhexylether, Ethylenglykoldi-n-butylether, Ethylenglykoldi-n-hexylether, Ethylenglykol-di-n-propylether, Dipropylenglykoldimethylether, Dipropylenglykolmonomethylether, Dipropylenglykolmono-n-butylether, Dipropylenglykolmono-n-propylether, Dipropylenglykolmono-tert-butylether, Dipropylenglykol-di-tert-butylether, Propylenglykolmonoethylether, Propylenglykolmonomethylether, Propylenglykolmono-n-propylether, Propylenglykolmonophenylether, Propylenglykolmono-tert-butylether, Propylenglykoldiphenylether, Propylenglykolmono-n-butylether, Tripropylenglykolmonomethylether und Poly(allylglycidylether), Ketone wie Diisobutylketon, Methylisoamylketon oder Etylamylketon, halogenhaltige organische Lösemittel wie Methylenchlorid oder Trichlormonofluorethan oder andere organische Lösemittel, wie beispielsweise Benzylalkohol, Dibutylphthalat, Propylenglykol und/oder Tris(butoxyethyl)phosphat, wobei Butylglykol, Solvesso® 100 und/oder Propylenglykolmono-n-butylether besonders geeignet sind.

Die Gesamtmenge an organischem Lösungsmittel beträgt ≤ 50 Gew.-%, bevorzugt ≥ 1,0 und ≤ 25 Gew.-% und insbesondere bevorzugt ≥ 5,0 und ≤ 20 Gew.-%, jeweils bezogen auf die Gesamtmonomerenmenge.

Erfindungsgemäß kann die Gesamtmenge des eingesetzten organischen Lösungsmittels im wässrigen Reaktionsmedium vor Initiierung der Polymerisationsreaktion vorgelegt werden. Es ist aber auch möglich, gegebenenfalls lediglich eine Teilmenge des organischen Lösungsmittels im wässrigen Reaktionsmedium vor Initiierung der Polymerisationsreaktion vorzulegen und dann unter Polymerisationsbedingungen während der radikalisch initiierten Emulsionspolymerisation die Gesamtmenge bzw. die gegebenenfalls verbliebene Restmenge in der ersten und/oder zweiten

Polymerisationsstufe nach Bedarf kontinuierlich oder diskontinuierlich zuzugeben. Selbstverständlich können in der ersten und in der zweiten Polymerisationsstufe unterschiedliche organische Lösungsmittel in unterschiedlichen Mengen eingesetzt werden. Mit Vorteil wird die Gesamtmenge an organischem Lösungsmittel verteilt auf die erste und zweite Polymerisationsstufe unter Polymerisationsbedingungen zudosiert, insbesondere als Bestandteil der Monomerengemische.

In der Regel beträgt die Menge an organischem Lösungsmittel in der ersten Polymerisationsstufe ≤ 50 Gew.-%, bevorzugt ≥ 1,0 und ≤ 25 Gew.-% und besonders bevorzugt ≥ 5,0 und ≤ 20 Gew.-%, jeweils bezogen auf die Gesamtmonomerenmenge 1 und in der zweiten Polymerisationssufe ≤ 50 Gew.-%, bevorzugt ≥ 1,0 und ≤ 25 Gew.-% und besonders bevorzugt ≥ 5,0 und ≤ 20 Gew.-%, jeweils bezogen auf die Gesamtmonomerenmenge 2.

Die in der ersten Polymerisationsstufe eingesetzte Menge an Monomeren A1 beträgt ≥ 0,1 und ≤ 15 Gew.-%, die Menge an Monomeren B1 ≥ 0,1 und ≤ 40 Gew.-% und die Menge an Monomeren C1 ≥ 50 und ≤ 99,8 Gew.-%, jeweils bezogen auf die Summe der Gesamtmengen an Monomeren A1 bis C1 (Gesamtmonomerenmenge 1).

Mit Vorteil werden in der ersten Polymerisationsstufe

| | |
|---|---|
| ≥ 1 und ≤ 12 Gew.-% | Acrylsäure, Methacrylsäure, Crotonsäure, Fumarsäure, Maleinsäure, 2-Methylmaleinsäure und/oder Itaconsäure, |
| ≥ 5 und ≤ 35 Gew.-% | Diethylenglykolmonoacrylat, 4-Hydroxybutylacrylat, 3-Hydroxypropylacrylat, 2-Hydroxypropylacrylat, 2-Hydroxyethylacrylat, Diethylenglykolmonomethacrylat, 4-Hydroxybutylmethacrylat, 3-Hydroxypropylmethacrylat, 2-Hydroxypropylmethacrylat und/oder 2-Hydroxyethylmethacrylat, |
| ≥ 60 und ≤ 94 Gew.-% | 2-Ethylhexylacrylat, n-Butylmethacrylat, n-Butylacrylat, Styrol und/oder Methylmethacrylat, |

und besonders bevorzugt

| | |
|---|---|
| ≥ 5 und ≤ 10 Gew.-% | Acrylsäure und/oder Methacrylsäure, |
| ≥ 15 und ≤ 35 Gew.-% | 2-Hydroxyethylacrylat und/oder 2-Hydroxyethylmethacrylat, |
| ≥ 60 und ≤ 80 Gew.-% | 2-Ethylhexylacrylat, n-Butylacrylat, Styrol und/oder Methylmethacrylat, |

eingesetzt.

Erfindungswesentlich ist, dass die Menge des Radikalkettenreglers so gewählt wird, dass das aus der ersten Polymerisationsstufe erhaltene Polymer 1 ein gewichtsmittleres Molekulargewicht im Bereich von ≥ 5000 und ≤ 40000 g/mol, vorteilhaft ≥ 7500 und ≤ 25000 g/mol und insbesondere vorteilhaft ≥ 9000 und ≤ 20000 g/mol aufweist.

Das gewichtsmittlere Molekulargewicht Mw wird in dieser Schrift, wenn nicht anders angegeben, generell über eine Größenausschlusschromatographie (size exclusion chromatography, SEC) unter Verwendung von Tetrahydrofuran als Eluent und von internen Polymer-Standards bestimmt. Die Methode und ihre Durchführung sind dem Fachmann geläufig. Vorteilhaft erfolgt die Bestimmung des gewichtsmittleren Molekulargewichte mit Tetrahydrofuran, enthaltend 0,1 Gew.-% Trifluoressigsäure, als Eluent bei einer Durchflussgeschwindigkeit von 1 ml/min und 35 °C Säulentemperatur. Dabei werden die wässrigen Polymerdispersionen im Eluenten vorteilhaft auf eine Konzentration von ca. 2 mg Polymer pro ml verdünnt, diese Lösung über ein 0,2 μm Filter (Sartorius Minisart SRP 25) zur Entfernung eines etwaigen unlöslichen Gelanteils filtriert und von der erhaltenen filtrierten Lösung 100 μl von dieser Lösung injiziert. Als Säulen werden drei Säulen mit einem inneren Durchmesser von 7,5 mm wie folgt kombiniert: 5 cm Vorsäule (Plgel 10μ Guard Vorsäule) gefolgt von zwei in Reihe geschalteten 30 cm Trennsäulen (jeweils Plgel 10μ Mixed B). Die Detektion erfolgt vorteilhaft mittels eines Differentialrefraktometers Agilent 1100, UV-Photometer Agilent 1100 VWD, PSS SLD7000-BI-MwA (UV/254 nm/Agilent). Die Kalibrierung ist dem Fachmann geläufig und erfolgt mit eng verteiltem Polystyrol-Standards, beispielsweise der Fa. Polymer Laboratories mit Molekulargewichten von Mw = 580 bis Mw = 7500000, sowie Hexylbenzol (M = 162).

Erfindungsgemäß werden in der ersten Polymerisationsstufe die Art und Mengen der Monomeren A1 bis C1 so gewählt werden, dass das erhaltene Polymer 1 eine Glasübergangstemperatur $Tg^1$ gemessen nach DIN EN ISO 11357-2 (2013-09) [Differentialthermoanalyse, midpoint temperature, Aufheizrate 20 K/min] im Bereich ≥ 20 °C, vorteilhaft ≥ 25 und ≤ 100 °C und insbesondere vorteilhaft ≥ 30 und ≤ 75 °C aufweist. Von Bedeutung in diesem Zusammenhang ist, dass die Glasübergangstemperatur $Tg^1$ generell nur von Polymeren 1 gemessen wird, welche ohne die Verwendung von organischen Lösungsmitteln hergestellt wurden.

Dabei ist dem Fachmann geläufig, dass nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) die Glasübergangstemperatur von höchstens schwach vernetzten Mischpolymerisaten unter Verwendung folgender Formel

$$1/Tg = x_1/Tg^1 + x_2/Tg^2 + .... x_n/Tg^n,$$

in guter Annäherung abgeschätzt werden kann, wobei $x_1$, $x_2$, .... $x_n$ die Massenbrüche der Monomeren 1, 2, .... n und $Tg^1$, $Tg^2$, .... $Tg^n$ die Glasübergangstemperaturen der jeweils nur aus einem der Monomeren 1, 2, .... n aufgebauten Polymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Cncyclopedia of Industrial Chemistry, Seite 169, Verlag Chemie, Weinheim, 1992, aufgeführt.

Wesentlich ist jedoch, dass die radikalisch initiierte wässrige Emulsionspolymerisation in der ersten Polymerisationsstufe vorteilhaft auch in Anwesenheit einer Polymersaat, beispielsweise in Anwesenheit von 0,01 bis 10 Gew.-%, häufig von 0,05 bis 7,0 Gew.-% und oft von 0,1 bis 4,0 Gew.-% einer Polymersaat, jeweils bezogen auf die Gesamtmonomerenmenge 1, durchgeführt werden kann.

Eine Polymersaat wird insbesondere dann eingesetzt, wenn die Teilchengröße der mittels einer radikalisch initiierten wässrigen Emulsionspolymerisation herzustellenden Polymerpartikel gezielt eingestellt werden soll (siehe hierzu beispielsweise US-A 2520959 und US-A 3397165).

Insbesondere wird eine Polymersaat eingesetzt, deren Polymersaatpartikel einen gewichtsmittleren Durchmesser Dw ≤ 100 nm, häufig ≥ 5 nm bis ≤ 50 nm und oft ≥ 15 nm bis ≤ 35 nm aufweisen. Die Bestimmung der gewichtsmittleren Teilchendurchmesser Dw erfolgt generell nach ISO 13321 mit einem High Performance Particle Sizer der Fa. Malvern bei 22 °C und einer Wellenlänge von 633 nm.

Üblicherweise wird die Polymersaat in Form einer wässrigen Polymerisatdispersion eingesetzt.

Wird eine Polymersaat verwendet, so wird vorteilhaft eine Fremdpolymersaat eingesetzt. Im Unterschied zu einer sogenannten in situ-Polymersaat, welche vor Beginn der eigentlichen Emulsionspolymerisation im Reaktionsgefäß hergestellt wird und welche in der Regel die gleiche monomere Zusammensetzung aufweist wie das durch die nachfolgende radikalisch initiierte wässrige Emulsionspolymerisation hergestellte Polymerisat, wird unter einer Fremdpolymersaat eine Polymersaat verstanden, die in einem separaten Reaktionsschritt hergestellt wurde und deren monomere Zusammensetzung von dem durch die radikalisch initiierte wässrige Emulsionspolymerisation hergestellten Polymerisat verschieden ist, was jedoch nichts anderes bedeutet, als dass zur Herstellung der Fremdpolymersaat und zur Herstellung der wässrigen Polymerisatdispersion unterschiedliche Monomere bzw. Monomerenmischungen mit unterschiedlicher Zusammensetzung eingesetzt werden. Die Herstellung einer Fremdpolymersaat ist dem Fachmann geläufig und erfolgt üblicherweise dergestalt, dass eine relativ kleine Menge an Monomeren sowie eine relativ große Menge an Emulgatoren in einem Reaktionsgefäß vorgelegt und bei Reaktionstemperatur eine ausreichende Menge an Polymerisationsinitiator zugegeben wird.

Erfindungsgemäß bevorzugt wird eine Polymerfremdsaat mit einer Glasübergangstemperatur ≥ 50 °C, häufig ≥ 60 °C oder ≥ 70 °C und oft ≥ 80 °C oder ≥ 90 °C eingesetzt. Insbesondere bevorzugt ist eine Polystyrol- oder eine Polymethylmethacrylatpolymersaat.

Die Gesamtmenge an Fremdpolymersaat kann im Polymerisationsgefäß vorgelegt werden. Es ist aber auch möglich, lediglich eine Teilmenge der Fremdpolymersaat im Polymerisationsgefäß vorzulegen und die verbleibende Restmenge während der Polymerisation gemeinsam mit den Monomeren A1 bis C1 zuzugeben. Falls erforderlich, kann aber auch die Gesamtpolymersaatmenge im Verlauf der Polymerisation zuzugeben werden. Vorzugsweise wird die Gesamtmenge an Fremdpolymersaat vor Initiierung der Polymerisationsreaktion im Polymerisationsgefäß vorgelegt.

Verfahrenswesentlich ist, dass in der zweiten Polymerisationsstufe in Anwesenheit des Polymers 1 ≤ 1,0 Gew.-% wenigstens eines Monomere A2, ≥ 0,1 und ≤ 40 Gew.-% wenigstens eines Monomeren B2, und ≥ 60 und ≤ 99,9 Gew.-% wenigstens eines Monomere C2, jeweils bezogen auf die Gesamtmonomerenmenge 2, in Gegenwart mindestens eines Radikalinitiators und mindestens eines Radikalkettenreglers sowie optional in Gegenwart eines Dispergierhilfsmittels polymerisiert werden.

Mit Vorteil werden in der zweiten Polymerisationsstufe

| | |
|---|---|
| ≤ 0,5 Gew.-% | Acrylsäure, Methacrylsäure, Crotonsäure, Fumarsäure, Maleinsäure, 2-Methylmaleinsäure und/oder Itaconsäure, |
| ≥ 5 und ≤ 35 Gew.-% | Diethylenglykolmonoacrylat, 4-Hydroxybutylacrylat, 3-Hydroxypropylacrylat, 2-Hydroxypropylacrylat, 2-Hydroxyethylacrylat, Diethylenglykolmonomethacrylat, 4-Hydroxybutylmethacrylat, 3-Hydroxypropylmethacrylat, 2-Hydroxypropylmethacrylat und/oder 2-Hydroxyethylmethacrylat, |
| ≥ 65 und ≤ 94,5 Gew.-% | 2-Ethylhexylacrylat, n-Butylmethacrylat, n-Butylacrylat, Styrol und/oder Methylmethacrylat |

und besonders bevorzugt

| | |
|---|---|
| ≤ 0,1 Gew.-% | Acrylsäure und/oder Methacrylsäure, |
| ≥ 15 und ≤ 35 Gew.-% | 2-Hydroxyethylacrylat und/oder 2-Hydroxyethylmethacrylat, |
| ≥ 70 und ≤ 84,9 Gew.-% | 2-Ethylhexylacrylat, n-Butylacrylat, Styrol und/oder Methylmethacrylat, |

eingesetzt. Mit Vorteil werden in der zweiten Polymerisationsstufe keinerlei Monomeren A2 eingesetzt.

Vorteilhaft werden in der zweiten Polymerisationsstufe die Art und Mengen der Monomeren A2 bis C2 so gewählt, dass ein allein aus diesen Monomeren in Abwesenheit eines Polymers 1 und eines organischen Lösungsmittels erhaltene Polymer 2 eine Glasübergangstemperatur $Tg^2$ gemessen nach DIN EN ISO 11357-2 (2013-09) im Bereich ≥ 0 und ≤ 40 °C, vorteilhaft ≥ 0 und ≤ 30 °C und insbesondere vorteilhaft ≥ 0 und ≤ 25 °C aufweisen würde.

Mit besonderem Vorteil werden in der ersten Polymerisationsstufe

| | |
|---|---|
| ≥ 5 und ≤ 10 Gew.-% | an Monomeren A1, |
| ≥ 15 und ≤ 35 Gew.-% | an Monomeren B1, und |
| ≥ 60 und ≤ 80 Gew.-% | an Monomeren C1 |

und in der zweiten Polymerisationsstufe,

| | |
|---|---|
| ≤ 0,1 Gew.-% | an Monomeren A2, |
| ≥ 15 und ≤ 35 Gew.-% | an Monomeren B2, und |
| ≥ 70 und ≤ 84,9 Gew.-% | an Monomeren C2 |

eingesetzt.

Erfindungsgemäß liegt das Gewichtsverhältnis von Gesamtmonomerenmenge 1 zu Gesamtmonomerenmenge 2 im Bereich 5:95 bis 70:30, vorteilhaft im Bereich 15:85 bis 60:40 und insbesondere vorteilhaft im Bereich 20:80 bis 50:50.

Erfindungsgemäß wird die Menge an Radkialkettenregler in der zweiten Polymerisationsstufe so gewählt wird, dass das nach der zweiten Polymerisationsstufe erhaltene Gesamtpolymer ein gewichtsmittleres Molekulargewicht ≤ 75000 g/mol, vorteilhaft ≥ 10000 und ≤ 60000 g/mol und insbesondere vorteilhaft ≥ 15000 und ≤ 50000 g/mol aufweist.

Verfahrenswesentlich ist jedoch, dass die Menge an optional eingesetzten Dispergierhilfsmitteln ≤ 3 Gew.-%, vorteilhaft ≤ 1 Gew.-% und insbesondere vorteilhaft ≥ 0,3 und ≤ 0,7 Gew.-%, jeweils bezogen auf Gesamtmonomerenmenge beträgt.

Mit Vorteil werden die Monomeren der ersten und der zweiten Polymerisationsstufe so gewählt, dass die Glasübergangstemperatur $Tg^1$ des Polymers 1 wenigstens 20 °C über der Glasübergangstemperatur $Tg^2$ des Polymers 2 liegt, die Differenz $Tg^1$ - $Tg^2$ also ≥ 20 °C ist. Mit Vorteil beträgt die Differenz $Tg^1$ - $Tg^2$ ≥ 30 °C und mit besonderem Vorteil ≥ 35 °C

Die nach der zweiten Polymerisationsstufe erhaltene wässrige Polymerisatdispersion enthält Polymerisatteilen, deren gewichtsmittlerer Teilchendurchmesser im Bereich ≥ 50 und ≤ 250 nm, vorteilhaft im Bereich ≥ 60 und ≤ 200 nm und insbesondere im Bereich ≥ 80 und ≤ 200 nm, liegen. Die Bestimmung der gewichtsmittleren Teilchendurchmesser erfolgt erfindungsgemäß nach ISO 13321 mit einem High Performance Particle Sizer der Fa. Malvern bei 22 °C und einer Wellenlänge von 633 nm.

Die nach dem erfindungsgemäßen Verfahren erhältlichen wässrigen Polymerdisperisonen weisen in der Regel einen Feststoffgehalt im Bereich von ≥ 35 und ≤ 70 Gew.-% und vorteilhaft ≥ 40 und ≤ 55 Gew.-%, jeweils bezogen auf die wässrige Polymerdispersion, auf. Dabei erfolgt die Bestimmung des Feststoffgehalt dergestalt, dass eine aliquote Menge (ca. 1 g) der wässrigen Polymerdispersion in eine Aluminiumschale mit einem Innendurchmesser von ca. 5 cm bei einer Temperatur von 120 °C bis zur Gewichtskonstanz getrocknet wird.

In einer Ausführungsform der vorliegenden Erfindung sollen die nach dem erfindungsgemäßen Verfahren erhältlichen wässrigen Polymerdispersionen umfasst sein.

Mit Vorteil eignen sich die nach dem erfindungsgemäßen Verfahren zugänglichen wässrigen Polymerdispersionen zur Verwendung als Bindemittel bei der Herstellung von Klebstoffen, Dichtmassen, Kunstharzputzen, Papierstreichmassen, Faservliesen, flexiblen Dachbeschichtungen und Anstrichmitteln sowie bei der Sandverfestigung, als Komponente bei der Herstellung von Textil- oder Lederhilfsmitteln und Schlagzähmodifier oder zur Modifizierung von mineralischen Bindemitteln und Kunststoffen.

Werden die erfindungsgemäßen wässrigen Polymerdispersionen zur Herstellung von Beschichtungsmassen eingesetzt, wobei im Rahmen der vorliegenden Schrift unter Beschichtungsmassen im wesentlichen Klebstoffe, Dichtmassen, Kunstharzputze, Papierstreichmassen oder Anstrichmittel verstanden werden sollen, so werden die wässrigen

Polymerdispersionen so gewählt, dass deren Mindestfilmbildetemperatur (MFT) vorteilhaft ≤ 15 °C, bevorzugt ≤ 10 °C und insbesondere bevorzugt ≤ 5 °C beträgt. Dabei sind die erhaltenen Polymerfilme dennoch nicht klebrig.

Die Bestimmung der Mindestfilmbildetemperatur erfolgt in der Weise, dass die wässrige Polymerdispersion auf eine Platte aufgezogen wird, die an einem Ende erwärmt und am anderen gekühlt wird (DIN ISO 2115: 2001-04). Durch visuelle Beurteilung und Temperaturfühler in dichten Abständen längs der Platte lässt sich die mindeste Filmbildetemperatur ermitteln.

Weisen die durch die zweistufige wässrige Emulsionspolymerisation hergestellten wässrigen Polymerdispersionen Polymere auf, welche ethylenisch ungesättigte Monomere mit Keto-, Aldehyd-und/oder Acetoacetoxy-Carbonylgruppen in einpolymerisierter Form enthalten, so kann es von Vorteil sein, wenn der wässrigen Polymerdispersion oder der damit hergestellten wässrigen Beschichtungsmasse noch zusätzlich ein Vernetzungsmittel zugemischt wird. Dabei kann das Vernetzungsmittel eine organische Verbindung mit zwei oder mehreren primären Aminogruppen, wie beispielsweise Isophorondiamin oder 4,7-Dioxadecan -[1,10]- Diamin oder eine organische Verbindung mit zwei oder mehreren Hydrazidgruppen, wie beispielsweise Adipinsäuredihydrazid (ADDH), Oxalsäuredihydrazid, Phthalsäuredihydrazid, Terephthalsäuredihydrazid sein.

Die vorliegenden wässrigen Polymerdispersionen zeichnen sich durch eine hohe Stabilität und geringer Koagulatbildung aus.

Die erfindungsgemäßen wässrigen Polymerdispersionen können auch als Bindemittel für zweikomponentige Beschichtungsmassen, z.B. für Lacke, Schutzüberzüge, Straßenmarkierungen, dekorative Überzüge, Anstrichfarben, Beschichtungen verwendet werden.

Für die unterschiedliche Verwendungen können geeignete Hilfsmittel zugesetzt werden, wie beispielsweise Verlaufsmittel, Verdicker, Entschäumer, Füllstoffe, Pigmente, Dispergierhilfsmittel für Pigmente etc.

Die Beschichtungen können durch Auftragen der Beschichtungsmassen auf geeignete Substrate, wie Holz, Beton, Metall, Glas, Kunststoff, Keramiken, Putze, Stein, Asphalt, Textilien, gestrichene, grundierte oder verwitterte Untergründe erhalten werden.

Mit besonderem Vorteil eignen sich die erfindungsgemäßen Zweikomponenten-Beschichtungsmassen jedoch zur Beschichtung von Metallen und Metalllegierungen, insbesondere im leichten, mittleren oder schweren Korrosionsschutz sowie zur Herstellung von hochglänzenden Beschichtungen.

Bei zweikomponentigen Beschichtungsmassen ist neben der erfindungsgemäßen wässrigen Polymerdispersion als weitere Komponente ein Vernetzer erforderlich, bei dem es sich vorteilhaft um dem Fachmann für diese Zwecke bekannte Polyisocyanate, Melamin-Formaldehyd-Harze und/oder Harnstoff-Formaldehyd-Harze handelt.

Erfindungsgemäß sind daher auch wässrige Formulierungen umfasst, welche neben der erfindungsgemäßen wässrigen Polymerdispersion noch wenigstens eine Komponente ausgewählt aus der Gruppe umfassend Polyisocyanat, Melamin-Formaldehyd-Harz und Harnstoff-Formaldehyd-Harz enthalten.

Die in den erfindungsgemäßen zweikomponentigen Beschichtungsmassen einsetzbaren Polyisocyanaten werden durch Polymerisation von monomeren aromatischen, aliphatischen und/oder cycloaliphatischen Isocyanaten, bevorzugt von aliphatischen und/oder cycloaliphatischen (in dieser Schrift kurz (cyclo)aliphatische) Isocyanaten und besonders bevorzugt von aliphatischen Isocyanaten hergestellt.

Aromatische Isocyanate sind solche, die mindestens ein aromatisches Ringsystem enthalten, also sowohl rein aromatische wie auch araliphatische Verbindungen. Unter Ersteren werden Isocyanate verstanden, bei denen die Isocyanatogruppen direkt an aromatische Ringsysteme gebunden sind, wohingegen bei Letzteren die Isocyanatogruppen an Alkylengruppen gebunden sind, aber die Verbindungen auch aromatische Ringsysteme enthalten, wie es beispielsweise bei TMXDI der Fall ist.

Cycloaliphatische Isocyanate sind solche, die mindestens ein cycloaliphatisches Ringsystem enthalten.

Aliphatische Isocyanate sind solche, die ausschließlich gerade oder verzweigte Kohlenstoffketten enthalten, also acyclische Verbindungen.

Bei den monomeren Isocyanaten handelt es sich bevorzugt um Diisocyanate, die genau zwei Isocyanatgruppen tragen. Es kann sich aber prinzipiell auch um Monoisocyanate mit einer Isocyanatgruppe handeln.

Es kommen prinzipiell auch höhere Isocyanate mit im Mittel mehr als 2 Isocyanatgruppen in betracht. Dafür eignen sich beispielsweise Triisocyanate wie Triisocyanatononan, 2'-Isocyanatoethyl-(2,6-diisocyanatohexanoat), 2,4,6-Triisocyanatotoluol, Triphenylmethantriisocyanat oder 2,4,4'-Triisocyanatodiphenylether oder die Gemische aus Di-, Tri- und höheren Polyisocyanaten, die beispielsweise durch Phosgenierung von entsprechenden Anilin/Formaldehyd-Kondensaten erhalten werden und Methylenbrücken aufweisende Polyphenylpolyisocyanate darstellen.

Diese monomeren Isocyanate weisen keine wesentlichen Umsetzungsprodukte der Isocyanatgruppen mit sich selbst auf.

Bei den monomeren Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, (z.B. Methyl- oder Ethyl-2,6-diisocyanatohexanoat),Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.02.6]decan-Isomerengemische, sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldi-phenylmethan-4,4'-diisocyanat, Tetramethylxylylendiisocyanat, 1,4-Diisocyanatobenzol oder Diphenylether-4,4'-diisocyanat.

Besonders bevorzugt sind 1,6-Hexamethylendiisocyanat, 1,3-Bis(isocyanatomethyl)cyclohexan, Isophorondiisocyanat und 4,4'- oder 2,4'-Di(isocyanatocyclohexyl)methan, ganz besonders bevorzugt sind Isophorondiisocyanat und 1,6-Hexamethylendiisocyanat, insbesondere bevorzugt ist 1,6-Hexamethylendiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 90:10 (w/w), bevorzugt von 70:30 bis 90:10.

Dicyclohexylmethan-4,4'-diisocyanat kann ebenfalls als Gemisch der verschiedenen cis- und trans-Isomere vorliegen.

Als Diisocyanate können sowohl solche Diisocyanate eingesetzt werden, die durch Phosgenierung der korrespondierenden Amine erhalten werden, als auch solche, die ohne die Verwendung von Phosgen, d.h. nach phosgenfreien Verfahren, hergestellt werden. Nach Angaben der EP-A-126 299 (US 4 596 678), EP-A-126 300 (US 4 596 679) und EP-A-355 443 (US 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanatomethyl-3,5,5-trimethyl-cyclohexan (Isophorondiisocyanat bzw. IPDI) hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und optional in Gegenwart von N-unsubstituierten Carbaminsäureestern, Dialkylcarbonaten und anderen aus dem Reaktionsprozeß zurückgeführten Nebenprodukten. So erhaltene Diisocyanate weisen in der Regel einen sehr geringen oder sogar nicht messbaren Anteil an chlorierten Verbindungen auf, was beispielsweise in Anwendungen in der Elektronikindustrie vorteilhaft ist.

In einer Ausführungsform der vorliegenden Erfindung weisen die eingesetzten Isocyanate einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch monomere Isocyanate mit einem höheren Chlorgehalt eingesetzt werden, beispielsweise bis zu 500 ppm.

Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Die Polyisocyanate, zu denen die monomeren Isocyanate oligomerisiert werden können, sind in der Regel wie folgt charakterisiert:
Die mittlere NCO-Funktionalität solcher Verbindungen beträgt in der Regel mindestens 1,8 und kann bis zu 8 betragen, bevorzugt 2 bis 5 und besonders bevorzugt 2,4 bis 4.

Der Gehalt an Isocyanatgruppen nach der Oligomerisierung, berechnet als NCO = 42 g/mol, beträgt, wenn nicht anders angegeben, in der Regel von 5 bis 25 Gew%.

Bevorzugt handelt es sich bei den Polyisocyanaten um folgende Verbindungen:

1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanatoisocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkylisocyanurate, welche cyclische Trimere der Diisocyanate darstellen, oder um Gemische mit ihren höheren, mehr als einen Isocyanuratring aufweisenden Homologen. Die Isocyanatoisocyanurate haben im Allgemeinen einen NCO-Gehalt von 10 bis 30 Gew.-%, insbesondere 15 bis 25 Gew.-% und eine mittlere NCO-Funktionalität von 2,6 bis 8. Die Isocyanuratgruppen aufweisenden Polyisocyanate können in geringerem Umfang auch Urethan- und/oder Allophanat-Gruppen enthalten, bevorzugt mit einem Gehalt gebundenen Alkohols von kleiner 2 Gew.-% bezogen auf das Polyisocyanat.

2) Uretdiongruppen aufweisende Polyisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
Die Uretdiongruppen aufweisenden Polyisocyanate werden häufig im Gemisch mit anderen Polyisocyanaten, insbesondere den unter Punkt 1) genannten, erhalten. Uretdiongruppen aufweisende Polyisocyanate weisen üblicherweise Funktionalitäten von 2 bis 3 auf.
Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppen-haltigen Produkten umgesetzt werden.

3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im Allgemeinen einen NCO-Gehalt von 18 bis 24 Gew.-% und eine mittlere NCO-Funktionalität von 2,8 bis 6 auf.

4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen erhalten werden. Diese Urethan- und/oder Allophanatgruppen aufweisenden Polyisocyanate haben im Allgemeinen einen NCO-Gehalt von 12 bis 24 Gew.-% und eine mittlere NCO-Funktionalität von 2,0 bis 4,5.
Solche Urethan- und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Wismut-, Kobalt-, Cäsium-, Zn-(II)- oder Zr-(IV)-Verbindungen, jeweils in Anwesenheit von ein-, zwei- oder mehrwertigen, bevorzugt einwertigen Alkoholen, hergestellt werden.
Diese Urethan- und/oder Allophanatgruppen aufweisenden Polyisocyanate treten häufig in Mischformen mit den unter Punkt 1) genannten Polyisocyanaten auf.

5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.

6) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstellbar.

7) Uretonimin-modifizierte Polyisocyanate.

8) Carbodiimid-modifizierte Polyisocyanate.

9) Hyperverzweigte Polyisocyanate, wie sie beispielsweise bekannt sind aus der DE-A 10013186 oder DE-A 10013187.

10) Polyurethan/Polyisocyanat-Präpolymere, aus Di- und/oder Polyisocyanaten mit Alkoholen.

11) Polyharnstoff/Polyisocyanat-Präpolymere.

12) Die unter den vorgenannten Punkten beschriebenen Polyisocyanate 1)-11), bevorzugt 1), 3), 4) und 6) können nach deren Herstellung in Biuretgruppen- oder Urethan-/Allophanat-Gruppen aufweisende Polyisocyanate mit aromatisch, cycloaliphatisch oder aliphatisch gebundenen, bevorzugt (cyclo)aliphatisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, optional in Gegenwart von geeigneten Katalysatoren. Diese Biuret- oder Urethan-/Allophanatgruppen aufweisenden Polyisocyanate weisen im Allgemeinen einen NCO-Gehalt von 10 bis 25 Gew.-% und eine mittlere NCO-Funktionalität von 3 bis 8 auf.

13) Hydrophil modifizierte Polyisocyanate, d.h. Polyisocyanate, die neben den unter 1) bis 12) beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei Letzteren handelt es sich um nichtionische Gruppen wie Alkyl-Polyethylenoxid und/oder ionische, welche von Phosphorsäure, Phosphonsäure, Schwefelsäure oder Sulfonsäure, bzw. ihren Salzen abgeleitet sind.

14) Modifizierte Polyisocyanate für Dual Cure Anwendungen, d.h. Polyisocyanate, die neben den unter 1) bis 13) beschriebenen Gruppen noch solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Molekülen handelt es sich beispielsweise um Hydroxyalkyl(meth)acrylate und andere Hydroxy-Vinylverbindungen.

In einer bevorzugten Ausführungsform der vorliegenden Erfindung handelt es sich bei den Polyisocyanaten um hydrophil modifizierte Polyisocyanate oder Gemische aus hydrophil modifizieren und nicht-modifizierten Polyisocyanaten.

In einer besonders bevorzugten Ausführungsform handelt es sich bei dem Polyisocyanat um Polyisocyanate auf Basis von 1,6-Hexamethylendiisocyanat.

In einer weiteren besonders bevorzugten Ausführungsform handelt es sich bei dem Polyisocyanat um ein Gemisch von Polyisocyanaten, ganz besonders bevorzugt von 1,6-Hexamethylendiisocyanat und von Isophorondiisocyanat.

In einer besonders bevorzugten Ausführungsform handelt es sich bei dem Polyisocyanat um ein Gemisch enthaltend niedrigviskose Polyisocyanate, bevorzugt Isocyanuratgruppen enthaltende Polyisocyanate, mit einer Viskosität von 600 bis 1500 mPa*s, insbesondere unter 1200 mPa*s, niederviskose Urethane und/oder Allophanate mit einer Viskosität von 200 bis 1600 mPa*s, insbesondere 600 bis 1500 mPa*s, und/oder Iminooxadiazindiongruppen enthaltende Polyisocyanate.

Die in dieser Schrift angegebenen Viskositätswerte werden gemäß DIN EN ISO 3219/A.3 bei 23 °C mit einem Kegel-Platte-System mit einem Geschwindigkeitsgefälle von 1000 $s^{-1}$ bestimmt, falls nicht anders vermerkt.

Das Verfahren zur Herstellung der Polyisocyanate kann erfolgen, wie in WO 2008/68198 beschrieben, dort besonders von Seite 20, Zeile 21 bis Seite 27, Zeile15, was hiermit durch Bezugnahme Bestandteil der vorliegenden Anmeldung sei.

Die Reaktion kann beispielsweise abgebrochen werden, wie dort von Seite 31, Zeile 19 bis Seite 31, Zeile 31 beschrieben und die Aufarbeitung erfolgen wie dort beschrieben von Seite 31, Zeile 33 bis Seite 32, Zeile 40, was hiermit jeweils durch Bezugnahme Bestandteil der vorliegenden Anmeldung sei.

Die Reaktion kann alternativ auch abgebrochen werden, wie in WO 2005/087828 von Seite 11, Zeile 12 bis Seite 12, Zeile 5 beschrieben, was hiermit durch Bezugnahme Bestandteil der vorliegenden Anmeldung sei.

Bei thermisch labilen Katalysatoren ist es weiterhin auch möglich, die Reaktion abzubrechen durch Erhitzen des Reaktionsgemischs auf eine Temperatur oberhalb von mindestens 80 °C, bevorzugt mindestens 100 °C, besonders bevorzugt mindestens 120 °C. Dafür reicht in der Regel bereits die Erwärmung des Reaktionsgemischs, wie sie zur Abtrennung des unumgesetzten Isocyanats durch Destillation in der Aufarbeitung erforderlich ist.

Sowohl bei thermisch nicht-labilen als auch bei thermisch labilen Katalysatoren besteht die Möglichkeit, durch Zugabe von Deaktivatoren die Reaktion bei niedrigeren Temperaturen abzubrechen. Geeignete Deaktivatoren sind beispielsweise Chlorwasserstoff, Phosphorsäure, organische Phosphate, wie Dibutylphosphat oder Diethylhexylphosphat, Carbamate wie Hydroxyalkylcarbamat oder organische Carbonsäuren.

Diese Verbindungen werden pur oder verdünnt in geeigneter Konzentration, die zum Reaktionsabbruch erforderlich ist, zugegeben.

Als zweite Komponente in Zweikomponenten-Beschichtungsmassen können auch Melamin-Formaldehyd-Harze und Harnstoff-Formaldehyd-Harze eingesetzt werden.

Melamin-Formaldehyd-Harze lassen sich nach Anwendungsgebieten (Formmassen, Leime, Tränkharze, Lacke), Alkylierungsstoffen (Veretherung mit Butanol, Methanol, Mischveretherung) oder wie hier aufgeführt nach dem Verhältnis aus Triazin:Formaldehyd:Veretherungsalkohol charakterisieren:

1. vollständig bis hoch methylolierte und vollalkylierte bis hochalkylierte Harze (HMMM-Typen)
2.1 teilmethylolierte und hochalkylierte Harze (High Imino Typen)
2.2. teilmethylolierte und teilalkylierte Harze (Methylol Typen)
3. niedrig methylolierte Harze (Melamin-Formaldehyd-Kondensate)

Die erste große Gruppe der vollständig veretherten Melamin-Formaldehyd-Harze, bei denen das sogenannte Einbaumolverhältnis Melamin:Formaldehyd:Alkohol theoretisch 1:6:6, in der Praxis in der Regel 1:>5,5:>5,0 und meist

1:>5,5:>4,5 beträgt, zeichnen sich durch ein ausgesprochen gutes High solids-Verhalten (relativ niedrige Viskosität bei hohem Feststoffgehalt) aus. Bei dieser Vernetzergruppe lässt sich der freie Formaldehyd aufgrund der niedrigen Viskosität des Aminoharzes leicht reduzieren. Derzeit erreichbar ist ein Gehalt an freiem Formaldehyd < 0,3 Gew.-%. Dabei enthalten die Handelsprodukte als Alkohol zumeist Methanol, es sind aber auch gemischtveretherte oder vollständig butylierte Typen bekannt.

Die vollständig veretherten Melamin-Formaldehyd-Harze werden in der Praxis bevorzugt in Beschichtungen von Gebinden (Can-Coating) und Metallbändern (Coil-Coatings) weltweit und in NAFTA auch für alle Schichten der Automobillackierung eingesetzt.

Die geringe thermische Reaktivität bei Einbrennbedingungen, wie 20 Minuten bei 140 °C, erfordert für diese vollständig veretherten Melamin-Formaldehyd-Harze die Katalyse mit starken Säuren. Dadurch erhält man eine sehr schnelle Härtung, durch Umetherung mit dem Bindemittel unter Freisetzung der Veretherungsalkohole ein homogenes Conetzwerk. Mit dieser Katalyse mit starken Säuren sind sehr kurze Aushärtungszeiten, wie bei teilmethylolierten Melamin-Formaldehyd-Harzen möglich. Während der Vernetzung ist eine Formaldehydemission möglich, die deutlich über dem freien Formaldehyd liegt und in der Rückspaltung von Methylolgruppen begründet ist.

Die zweite große Gruppe der teilweise veretherten Melamin-Formaldehyd-Harze, die in der Praxis zumeist ein Einbaumolverhältnis Melamin: Formaldehyd:Alkohol von 1:3 bis 5,4:2 bis 4,3 aufweisen, zeichnen sich durch eine im Vergleich zur ersten Gruppe deutlich erhöhten thermischen Reaktivität ohne Säurekatalyse aus. Während der Produktion dieser Vernetzer findet eine Eigenkondensation statt, die zu einer höheren Viskosität (geringeres High solids-Verhalten) führt und dadurch die Entfernung des freien Formaldehyd bei der Destillation erschwert. Für diese Produkte sind ein Gehalt an freiem Formaldehyd von 0,5 bis 1,5 Gew.-% Standard, jedoch gibt es auch Produkte mit einem Gehalt an freiem Formaldehyd von 0,3 bis 3 Gew.-%. Auch hier sind als Handelsprodukte methylierte, butylierte sowie gemischt veretherte Typen weit verbreitet. Die Veretherung mit weiteren Alkylierungsstoffen ist in der Literatur beschrieben bzw. als spezielle Produkte erhältlich.

High-Imino- und Methylol-Typen als jeweilige Untergruppe weisen beide eine unvollständige Methylolierung, d.h. Formaldehyd-Einbaumolverhältnisse von weniger als 1:5,5, auf. Die High-Imino-Typen unterscheiden sich von den Methylol-Typen jedoch durch einen hohen Alkylierungsgrad, d.h. dem Anteil der veretherten Methylolgruppen an den eingebauten Formaldehyd-Äquivalenten, von meist bis zu 80 Gew.-%, wohingegen die Methylol-Typen in der Regel < 70 Gew.-% aufweisen.

Einsatzgebiete für die teilmethylolierten Melamin-Formaldehyd-Harze erstrecken sich über alle Anwendungsbereiche, auch in Kombination mit HMMM Typen zur Reaktivitätsanpassung, wo Härtungstemperaturen 100 bis 150 °C gefordert sind. Eine zusätzliche Katalyse mit Hilfe schwacher Säuren ist möglich und gängige Praxis.

Neben der Reaktion des Melamin-Formaldehyd-Harze mit dem Zweistufenpolymeren der erfindungsgemäßen wässrigen Polymerdispersion findet ein deutlich erhöhter Anteil an Eigenvernetzung des Melamin-Formaldehyd-Harzes mit sich selbst statt. Die Folge ist eine reduzierte Elastizität des Gesamtsystems, welche durch die geeignete Auswahl des Kombinationspartners ausgeglichen werden muss. Vorteilhaft dagegen ist die reduzierte Gesamtformaldehydemission aus den daraus hergestellten Beschichtungen.

Die erfindungsgemäß einsetzbaren Melamin-Formaldehyd-Harze sind vorteilhaft wie folgt aufgebaut:
Wie eingangs erwähnt werden Melamin-Formaldehyd-Harze häufig über das Einbaumolverhältnis Melamin:Formaldehyd:Alkohol charakterisiert. Dabei ist der Alkohol bevorzugt ausgewählt aus der Gruppe bestehend aus Methanol, Ethanol, iso-Butanol und n-Butanol oder deren Gemische, bevorzugt ausgewählt aus der Gruppe bestehend aus Methanol und n-Butanol.

Erfindungsgemäß einsetzbare Melamin-Formaldehyd-Harze können ein Einbaumolverhältnis 1 : (2 bis 6) : (1 bis 6) aufweisen, wobei in Einzelfällen durch Bildung von Oligoformalketten auch ein Formaldehyd-Einbauverhältnis bis zu 8 denkbar sein kann.

Bevorzugt sind Einbaumolverhältnisse von 1 : (3 bis 6) : (1,5 bis 6).

Für methylveretherte Melamin-Formaldehyd-Harze sind Einbaumolverhältnisse von 1 : (3,6 bis 5,7) : (2,1 bis 4,7) besonders bevorzugt, ganz besonders bevorzugt sind Einbaumolverhältnisse von 1 : (5 bis 6) : (3,5 bis 6), insbesondere 1 : (5 bis 6) : (4 bis 5).

Für n-butylveretherte Melamin-Formaldehyd-Harze sind Einbaumolverhältnisse von 1 : (3,2 bis 5,7) : (1,3 bis 4) besonders bevorzugt, ganz besonders bevorzugt sind Einbaumolverhältnisse von 1 : (5 bis 6) : (3,5 bis 6), insbesondere 1 : (5 bis 6) : (3,5 bis 4,5).

Die einsetzbaren Melamin-Formaldehyd-Harze können nicht nur eine Melamingruppe pro Polykondensat aufweisen sondern durchaus auch mehrere, bevorzugt bis zu sechs, besonders bevorzugt bis zu vier, ganz besonders bevorzugt bis zu drei und insbesonders bis zu zwei.

Die erfindungsgemäß einsetzbaren Harnstoff-Formaldehyd-Harze sind vorteilhaft wie folgt aufgebaut:
Das Einbaumolverhältnis von Harnstoff:Formaldehyd:Alkohol beträgt von 1 : (1 bis 4) : (0,3 bis 3), bevorzugt 1 : (1 bis 3) : (0,4 bis 2), besonders bevorzugt 1 : (1,5 bis 2,5) : (0,5 bis 1,5) und ganz besonders bevorzugt von 1 : (1,6 bis 2,1) : (0,6 bis 1,3).

Dabei ist der Alkohol bevorzugt ausgewählt aus der Gruppe bestehend aus Methanol, Ethanol, iso-Butanol und n-Butanol oder deren Gemische, bevorzugt ausgewählt aus der Gruppe bestehend aus Methanol und n-Butanol.

Insbesondere eignet sich die erfindungsgemäße wässrige Formulierung, enthaltend die erfindungsgemäße wässrige Polymerdispersion und wenigstens eine Komponente ausgewählt aus der Gruppe umfassend Polyisocyanat, Melamin-Formaldehyd-Harz und Harnstoff-Fromaldehyd-Harz in einer besonderen Ausführungsform als Bindemittel für Lacke und als Bindemittel für Anstrichfarben.

Werden die vorgenannten wässrigen Formulierungen zur Herstellung von Lacken und Anstrichmitteln eingesetzt, so können diese wässrigen Formulierungen noch zusätzlich Pigmente, Füllstoffe und/oder Korrosionsschutzmittel enthalten.

Dabei können als Pigmente prinzipiell alle dem Fachmann geläufigen organischen und/oder anorganischen Weiß- bzw. Buntpigmente mit einer Teilchengröße $\leq$ 18 mesh eingesetzt werden.

Als wichtigstes Weißpigment ist aufgrund seines hohen Brechungsindex (Rutil: 2,70 und Anatas: 2,55) und seines guten Deckvermögens Titandioxid in seinen verschiedenen Modifikationen zu nennen. Aber auch Zinkoxid und Zinksulfid werden als Weißpigmente eingesetzt. Dabei können diese Weißpigmente in oberflächenbeschichteter (d.h. gecoateter) bzw. unbeschichteter (d.h. nicht gecoateter) Form eingesetzt werden. Daneben werden aber auch organische Weißpigmente, wie beispielsweise nichtverfilmende styrol- und carboxylgruppenreiche hohle Polymerisatteilchen mit einer Teilchengröße von ca. 300 bis 400 nm (sogenannte Opakteilchen) verwendet.

Neben Weißpigmenten können zur Farbgestaltung dem Fachmann geläufige unterschiedlichste Buntpigmente, beispielsweise die etwas preiswerteren anorganischen Eisen-, Cadmium-, Chrom- und Bleioxide bzw. -sulfide, Bleimolybdat, Kobaltblau oder Ruß sowie die etwas teureren organischen Pigmente, beispielsweise Phthalocyanine, Azopigmente, Chinacridone, Perylene oder Carbazole eingesetzt werden.

Selbstverständlich können die wässrigen Formulierungen zusätzlich zu den Pigmenten noch sogenannte, dem Fachmann geläufige Füllstoffe enthalten. Als Füllstoffe werden im Wesentlichen pulverförmige anorganische Materialien mit einer Teilchengröße $\leq$ 18 mesh mit im Vergleich zu den Pigmenten geringerem Brechungsindex verstanden (weiße Füllstoffe weisen nach DIN 55943 und DIN 55945 Brechungsindexwerte < 1,7 auf). Die pulverförmigen Füllstoffe sind dabei häufig natürlich vorkommende Mineralien, wie beispielsweise Calcit, Kreide, Dolomit, Kaolin, Talk, Glimmer, Diatomeenerde, Baryt, Quarz oder Talk/Chlorit-Verwachsungen aber auch synthetisch hergestellte anorganische Verbindungen, wie beispielsweise präzipitiertes Calciumcarbonat, kalziniertes Kaolin oder Bariumsulfat sowie pyrogene Kieselsäure. Bevorzugt wird als Füllstoff Calciumcarbonat in Form des kristallinen Calcits oder der amorphen Kreide eingesetzt.

Als Korrosionsschutzmittel, kommen erfindungsgemäß insbesondere Korrosionsinhibitoren oder Korrosionsschutzpigmente in Betracht.

Beispiele für Korrosionsinhibitoren sind aufgeführt in "Corrosion Inhibitors, 2nd Edition: An industrial Guide", Ernest W. Flick, Ed: William Andrew Inc ISBN: 978-0-8155-1330-8. Bevorzugte Korrosionsinhibitoren sind Hexamin, Benzotriazol, Phenylenediamin, Dimethylethanolamin, Polyanilin, Natriumnitrit, Zimtaldehyd, Kondensationsprodukte von Aldehyden und Aminen (Imine), Chromate, Nitrite, Phosphate, Hydrazin und Ascorbinsäure.

Beispiele für Korrosionsschutzpigmente sind modifizierte Zink-Orthophosphate (beispielsweise HEUCOPHOS® ZPA, ZPO and ZMP), Polyphosphate (beispielsweise HEUCOPHOS® ZAPP, SAPP, SRPP and CAPP), WSA-Wide Spectrum Anticorrosives (beispielsweise HEUCOPHOS® ZAMPLUS and ZCPPLUS) und modifizierte Silikat-Pigmente (beispielsweise HEU-COSIL® CTF, Halox® 750), beispielsweise der Firma Heubach GmbH, sowie Bariumborphosphat (beispielsweise Halox® 400), Bariumphosphosilikate (beispielsweise Halox® BW-111, Halox® BW-191), Calciumborosilikate (beispielsweise Halox® CW-291, CW-22/221, CW-2230), Calciumphosphosilikat (beispielsweise Halox® CW-491), Strontiumphosphosilikat (beispielsweise Halox® SW-111) oder Strontiumzinkphoshosilikat (beispielsweise Halox® SZP-391) der Firma Halox®.

Das Aufbringen der wässrigen Formulierung, insbesondere wässrige Beschichtungsmittel, insbesondere vorteilhaft Lacke und Anstrichmittel, auf ein Substrat kann in bekannter Weise, z. B. durch Spritzen, Spachteln, Rakeln, Bürsten, Rollen, Walzen oder Gießen erfolgen. Die Beschichtungsstärke liegt in der Regel in einem Bereich von etwa 3 bis 1000 g/m$^2$ und vorzugsweise 10 bis 200 g/m$^2$. Anschließend werden die flüchtigen Bestandteile der wässrigen Formulierung durch Trocknung entfernt. Dieser Vorgang kann - falls gewünscht - ein- oder mehrfach wiederholt werden.

Die Trocknung ist dem Fachmann geläufig und erfolgt beispielsweise in einem Tunnelofen oder durch Ablüften. Die Trocknung kann auch durch NIR-Strahlung erfolgen, wobei als NIR-Strahlung hier elektromagnetische Strahlung im Wellenlängenbereich von 760 nm bis 2,5 $\mu$m, bevorzugt von 900 bis 1500 nm bezeichnet ist. Das Trocknen kann bei einer Temperatur von Umgebungstemperatur bis 100 °C über einen Zeitraum von wenigen Minuten bis mehreren Tagen erfolgen.

Die wässrigen Formulierungen, insbesondere die Lacke und Anstrichmittel enthaltend Korrosionsschutzmittel, eignen sich vorteilhaft zum Beschichten metallischer Oberflächen. Dabei kann es sich im Prinzip um die Oberflächen beliebiger Metalle handeln. Insbesondere handelt es sich aber um solche Metalle oder Legierungen, welche üblicherweise als metallische Konstruktionswerkstoffe eingesetzt werden, und die vor Korrosion geschützt werden müssen.

Mit den wässrigen Formulierungen werden zum Korrosionsschutz als Substrate die Oberflächen von Eisen, Stahl, Zn, Zn-Legierungen, Al oder Al-Legierungen behandelt. Dabei können die metallischen, vorteilhaft fettfreien Oberflächen unbeschichtet sein, mit Zink, Aluminium oder deren Legierungen überzogen sein, feuerverzinkt, galvanisch verzinkt, sherardisiert oder mit Primern vorbeschichtet sein.

Insbesondere handelt es sich um die Oberflächen von Eisen, Stahl, Zink, Zinklegierungen, Aluminium oder Aluminiumlegierungen. Stahl kann die üblichen, dem Fachmann bekannten Legierungskomponenten enthalten. Es kann sich dabei um die Oberflächen von vollständig aus den besagten Metallen bzw. Legierungen bestehenden Körpern handeln. Es kann sich aber auch um die Oberflächen von mit Zn, Zn-Legierungen, Al oder Al-Legierungen beschichteten Körpern handeln, wobei die Körper aus anderen Materialien, beispielsweise aus anderen Metallen, Legierungen, Polymeren oder Verbundwerkstoffen bestehen kann. In einer bevorzugten Ausführungsform der Erfindung handelt es sich um Stahloberflächen oder verzinkte und/oder aluminierte Stahloberflächen.

Zink- oder Aluminiumlegierungen sind dem Fachmann bekannt. Typische Bestandteile von Zinklegierungen umfassen insbesondere Al, Pb, Si, Mg, Sn, Cu oder Cd. Typische Bestandteile von Aluminium-Legierungen umfassen insbesondere Mg, Mn, Si, Zn, Cr, Zr, Cu oder Ti. Der Begriff "Zinklegierung" soll auch Al/Zn-Legierungen einschließen, bei denen Al- und Zn in annähernd gleicher Menge vorhanden sind. Je nach dem gewünschten Anwendungszweck wählt der Fachmann Art und Menge von Legierungsbestandteilen aus. Zn- oder Aluminiumbeschichtungen können auf Stahl beispielsweise durch Schmelztauchverfahren, z.B. Feuerverzinken, oder durch Sherardisieren aufgebracht werden. Sofern das Bauteil immobil ist oder die Bauteilgeometrie es nicht zulässt, können entsprechende Schichten auch mittels thermischem Spritzen (Spritzverzinken, Spritzaluminieren) aufgebracht werden.

Mittels den erfindungsgemäßen wässrigen Polymerdispersionen, insbesondere der erfindungsgemäßen wässrigen Formulierungen können vorteilhaft metallische Oberflächen vor Korrosion geschützt werden, die während des Gebrauchs in Kontakt mit atmosphärischer Luft stehen, es kann sich aber auch um Oberflächen handeln, die während des Gebrauchs in Kontakt mit Wasser, Erdreich oder anderen korrosiven Medien stehen.

Bei den metallischen Oberflächen, die mittels der erfindungsgemäßen wässrigen Polymerdispersionen, insbesondere der erfindungsgemäßen wässrigen Formulierungen vor Korrosion geschützt werden sollen, kann es sich prinzipiell um beliebige Oberflächen handeln. Bevorzugt handelt es sich aber um die Oberflächen von metallischen Bauwerken oder Metallkonstruktionen bzw. den dazu benötigten Bauteilen. Metallkonstruktionen bzw. Bauwerke werden üblicherweise aus Baustahl, wie Stahlträgern, Stahlrohren oder Stahlblechen durch Nieten, Schweißen oder Schrauben zu entsprechenden Konstruktionen verbunden. Bei einer Ausführungsform der Erfindung kann es sich bei den beschichteten Gegenständen um immobile metallische Konstruktionen wie beispielsweise Gebäude, Brücken, Strommasten, Tanks, Container, Gebäude, Pipelines, Kraftwerke, chemische Anlagen, Schiffe, Kräne, Pfähle, Spundwände, Armaturen, Rohre, Tanks, Fittings, Flansche, Kupplungen, Hallen, Dächer und Baustahl handeln. Bei dieser Ausführungsform werden Korrosionsschutzbeschichtungen üblicherweise an Ort und Stelle aufgestrichen oder aufgespritzt. Dabei kann es sich sowohl um einen Erstsschutz oder um eine Instandsetzung handeln. Die Trocknung und Härtung derartiger Korrosionsschutzbeschichtungen erfolgt unter atmosphärischen Bedingungen also bei Umgebungstemperatur sowie in Gegenwart von Luft und üblicher Luftfeuchtigkeit. Die relative Luftfeuchtigkeit kann beliebig sein, bevorzugt beträgt sie zwischen 10 und 80 % und besonders bevorzugt zwischen 30 und 70 %. Je nach dem erforderlichen Schutzgrad wird der Korrosionsschutz von Oberflächen durch Korrosionsschutzanstriche auch als leichter, mittlerer und schwerer Korrosionsschutz bezeichnet.

Die erfindungsgemäßen wässrigen Polymerdispersionen und insbesondere die erfindungsgemäßen wässrigen Formulierungen können als oder in Zubereitungen zur Behandlung von metallischen Oberflächen verwendetet werden.

Dies kann im leichten, mittleren oder schweren Korrosionsschutz beispielsweise durch Aufsprühen oder Aufstreichen erfolgen, wobei der Anstrich anschließend unter atmosphärischen Bedingungen aushärtet. Es können selbstverständlich auch mehrere Anstriche bzw. Beschichtungen gleicher oder verschiedener Zusammensetzung nacheinander aufgebracht werden. Die Gesamtdicke (trocken) derartiger Korrosionsschutzanstriche wird vom Fachmann je nach den gewünschten Eigenschaften der Korrosionsschutzschicht bestimmt. Sie beträgt beispielsweise mindestens 25 $\mu$m, in der Regel mindestens 40 $\mu$m, bevorzugt mindestens 50 $\mu$m, besonders bevorzugt mindestens 60 $\mu$m und ganz besonders bevorzugt mindestens 80 $\mu$m, insbesondere mindestens 100 $\mu$m, speziell mindestens 125 $\mu$m, oft mindestens 150 $\mu$m und sogar mindestens 175 $\mu$m oder mindestens 200 $\mu$m. Die obere Grenze für die Gesamtschichtdicke, d.h. die Dicke aller aufgebrachten Korrosionsschutzschichten zusammen, beträgt 2 mm, bevorzugt weniger als 1,5 mm, besonders bevorzugt weniger als 1 mm, ganz besonders bevorzugt weniger als 800 $\mu$m und insbesondere weniger als 500 $\mu$m.

Die Applikation der erfindungsgemäßen Lacke kann in beliebiger Weise, z. B. durch Streichen oder Spritzen erfolgen.

Die Aushärtemethode richtet sich nach der Natur des Vernetzers und erfolgt in aller Regel unter atmosphärischen Bedingungen.

Die zum Aushärten erforderliche Temperatur richtet sich insbesondere nach dem eingesetzten Vernetzer. Sehr reaktive Vernetzer können bei niedrigeren Temperaturen ausgehärtet werden als weniger reaktive Vernetzer.

Der Begriff "atmosphärischer Korrosionsschutz" bedeutet im Rahmen dieser Schrift, dass das Anstrichmittel, das mindestens eine erfindungsgemäße Polymerdispersion enthält, eine Schichtdicke nach Trocknung von mindestens 40 μm, bevorzugt mindestens 50 μm, besonders bevorzugt mindestens 60 μm und ganz besonders bevorzugt mindestens 80 μm und eine Schichtdicke bis zu 2 mm, bevorzugt weniger als 1,5 mm, besonders bevorzugt weniger als 1 mm, ganz besonders bevorzugt weniger als 800 μm und insbesondere weniger als 500 μm, wobei das Anstrichmittel nach dem Aufbringen auf die Oberfläche unter üblichen Umgebungsbedingungen, d.h. etwa bei Umgebungs- oder bei Raumtemperatur, in Gegenwart von Luft sowie üblicher Luftfeuchtigkeit ohne die Verwendung zusätzlicher Apparaturen oder Einrichtungen auszuhärten. Typische Härtungstemperaturen betragen je nach der Umgebung mehr als 0 bis 40 °C, bevorzugt 5 bis 35 °C, besonders bevorzugt 10 bis 30 °C und ganz besonders bevorzugt 15 bis 25 °C in Gegenwart von Luft und üblicher Luftfeuchtigkeit. Die relative Luftfeuchtigkeit kann beliebig sein, bevorzugt beträgt sie zwischen 10 und 80 % und besonders bevorzugt zwischen 30 und 70 %. Es ist für den Fachmann klar, dass die Zeit bis zum vollständigen Härten ein und desselben Bindemittelsystems je nach den tatsächlich herrschenden Umgebungsbedingungen unterschiedlich sein kann.

In einer weiteren Ausführungsform können die erfindungsgemäßen wässrigen Polymerdispersionen und wässrigen Formulierungen in Klarlacken und sogenannten Direct-to-Metal Beschichtungen eingesetzt werden, wobei bei den Klarlacken in der Regel keine Pigmente und keine Korrosionsschutzmittel eingesetzt werden. Klarlacke werden einschichtig auf das Metall aufgetragen und finden insbesondere dann Anwendung, wenn zusätzlich zu einer Korrosionsschutzwirkung noch Chemikalienbeständigkeit oder Glanz gefordert ist. Selbstverständlich können die erfindungsgemäßen Polymerdispersionen und wässrigen Formulierungen auch in sogenannten Decklacken eingesetzt werden. Diese Decklacke enthalten jedoch in der Regel Pigmente. Typische Trockenschichtdicken für Klar- und Decklacke betragen 15 bis 200 μm, bevorzugt 20 bis 100 μm und besonders bevorzugt 20 bis 80 μm.

Die auf ein Substrat aufgebrachten erfindungsgemäßen wässrigen Formulierungen und darauf basierende Lacke oder Anstrichmittel werden bei einer Temperatur zwischen Raumtemperatur und 200 °C, bevorzugt 100 bis 150 °C über einen Zeitraum von 1 Minute bis 40 Minuten, bevorzugt 10 bis 25 Minuten eingebrannt.

Besonders bevorzugt werden die erfindungsgemäßen wässrigen Polymerdispersionen und wässrigen Formulierungen in Korrosionsschutzmitteln verwendet, die in Korrosivitätskategorien C2 (gemäß DIN EN ISO 12944) oder höher eingesetzt werden, bevorzugt in Korrosivitätskategorien C3 oder höher und besonders bevorzugt in Korrosivitätskategorien C4 oder höher.

Dabei sind die Korrosivitätskategorien gemäß DIN EN ISO 12944 bezogen auf den flächenbezogenen Massenverlust bzw. auf die Dickenabnahme nach dem ersten Jahr der Auslagerung wie folgt bei unlegiertem Stahl bzw. bei Zink definiert:

| | | |
|---|---|---|
| C2 (gering korrosiv): | unlegierter Stahl: | Massenverlust > 10 - 200 $g/m^2$ |
| | | Dickenabnahme > 1,3 - 25 μm |
| | Zink: | Massenverlust > 0,7 - 5 $g/m^2$ |
| | | Dickenabnahme > 0,1 - 0,7 μm |
| C3 (mäßig korrosiv): | unlegierter Stahl: | Massenverlust > 200 - 400 $g/m^2$ |
| | | Dickenabnahme > 25 - 50 μm |
| | Zink: | Massenverlust > 5 - 15 $g/m^2$ |
| | | Dickenabnahme > 0,7 - 2,1 μm |
| C4 (stark korrosiv): | unlegierter Stahl: | Massenverlust > 400 - 650 $g/m^2$ |
| | | Dickenabnahme > 50 - 80 μm |
| | Zink: | Massenverlust > 15 - 30 $g/m^2$ |
| | | Dickenabnahme > 2,1 - 4,2 μm |
| C5-I/M (sehr stark): | unlegierter Stahl: | Massenverlust > 650 - 1500 $g/m^2$ |
| | | Dickenabnahme > 80 - 200 μm |
| | Zink: | Massenverlust > 30 - 60 $g/m^2$ |
| | | Dickenabnahme > 4,2 - 8,4 μm |

Von Bedeutung ist, dass aus den erfindungsgemäßen wässrigen Polymeridispersionen in einfacher Weise (beispielsweise Gefrier- oder Sprühtrocknung) die entsprechenden Polymerpulver zugänglich. Diese erfindungsgemäß zugänglichen Polymerisatpulver lassen sich ebenfalls als Bindemittel bei der Herstellung von Klebstoffen, Dichtmassen,

Kunstharzputzen, Papierstreichmassen, Faservliesen, flexiblen Dachbeschichtungen und Anstrichmitteln sowie bei der Sandverfestigung, als Komponente bei der Herstellung von Textil- oder Lederhilfsmitteln und Schlagzähmodifier oder zur Modifizierung von mineralischen Bindemitteln und Kunststoffen einsetzen.

Ein weiterer Gegenstand der vorliegenden Erfindung sind Beschichtungsmassen, enthaltend

- mindestens eine erfindungsgemäße wässrige Polymerdispersion als Bindemittel,
- optional mindestens ein anderes Bindemittel, welches sich von der erfindungsgemäßen wässrigen Polymerdispersion unterscheidet,
- optional mindestens einen Vernetzer, ausgewählt aus der Gruppe bestehend aus Polyisocyanaten, Melamin-Formaldehyd-Harzen und Harnstoff-Formaldehyd-Harzen,
- optional mindestens ein Pigment, und
- optional mindestens einen Korrosionsinhibitor.

Bei den optional eingesetzten anderen Bindemitteln, welche sich von den erfindungsgemäßen wässrigen Polymerdispersionen unterscheiden, kann es sich beispielsweise um wasserbasierte, wasserverdünnbare, wassermischbare Polyacrylatpolyole, Polyesterpolyole, Polyetherpolyole, Polyurethanpolyole; Polyharnstoffpolyole; Polyesterpolyacrylatpolyole; Polyesterpolyurethanpolyole; Polyurethanpolyacrylatpolyole, Polyurethanmodifizierte Alkydharze; Fettsäuremodifizierte Polyesterpolyurethanpolyole, Kopolymerisate mit Allylethern, Propfpolymerisate aus den genannten Stoffgruppen mit z.B. unterschiedlichen Glasübergangstemperaturen sowie Mischungen der genannten Bindemittel handeln. Bevorzugt sind Polyacrylatpolyole, Polyesterpolyole und Polyurethanpolyole.

Bevorzugte Hydroxyzahlen dieser anderen Bindemittel, gemessen gemäß DIN 53240-2 (potentiometrisch), sind 40 bis 350 mg KOH/g und bevorzugt 80 bis 180 mg KOH/g Festharz für Polyesterpolyole, und 15 bis 250 mg KOH/g und bevorzugt 80 bis 160 mg KOH/g Festharz für Polyacrylatpolyole sowie 10 bis 150 mg KOH/g und bevorzugt 20 bis 100 mg KOH/g Festharz für Polyurethanpolyole.

Zusätzlich können diese anderen Bindemittel eine Säurezahl gemäß DIN EN ISO 3682 (potentiometrisch) von bis 200 mg KOH/g, bevorzugt von bis 150 und besonders bevorzugt von bis 100 mg KOH/g Bindemittel aufweisen.

Besonders bevorzugte andere Bindemittel sind Polyacrylatpolyole und Polyesterole.

Polyacrylatpolyole weisen bevorzugt ein zahlenmittleres Molekulargewicht $M_n$ von mindestens 500 g/mol, besonders bevorzugt mindestens 1200 g/mol auf. Das Molekulargewicht $M_n$ kann prinzipiell nach oben unbegrenzt sein, bevorzugt bis zu 50000 g/mol, besonders bevorzugt bis zu 20000 g/mol, ganz besonders bevorzugt bis zu 10000 g/mol und insbesondere bis zu 5000 g/mol betragen.

Die Bestimmung der zahlenmittleren Molekulargewichte erfolgt durch eine dem Fachmann geläufigen Gelpermeationschromatographie unter Verwendung geeigneter Eichverbindungen.

Weitere andere Bindemittel sind z.B. Polyesterpolyole, wie sie durch Kondensation von Polycarbonsäuren, insbesondere Dicarbonsäuren mit Polyolen, insbesondere Diolen erhältlich sind. Um eine für die Polymerisation angemessene Funktionalität des Polyesterpolyols zu gewährleisten werden partiell auch Triole, Tetrole etc. wie auch Trisäuren, etc. eingesetzt.

Polyesterpolyole, sind z.B. aus Ullmanns Enzyklopädie der technischen Chemie, 4. Auflage, Band 19, Seiten 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, aromatisch oder heterocyclisch sein und optional, z.B. durch Halogenatome, substituiert und/oder ungesättigt sein.

Die Erfindung soll anhand folgender nicht einschränkender Beispiele erläutert werden.

Beispiele

Beispiel 1

In einem mit Dosiereinrichtungen und Temperaturreglung ausgerüstetem 2 I-Polymerisationsgefäß wurden bei 20 bis 25 °C (Raumtemperatur) unter Stickstoffatmosphäre

| | |
|---|---|
| 302,0 g | entionisiertes Wasser, und |
| 6,0 g | einer 15 gew.-%igen wässrigen Lösung von Natriumlaurysulfat |

vorgelegt und unter Rühren auf 80 °C aufgeheizt. Bei Erreichung dieser Temperatur wurde 11,0 g von Zulauf 1 zugegeben, daran anschließend 25,7 g einer 7 gew.-%igen wässrigen Lösung von Natriumperoxodisulfat innerhalb von 5 min zudosiert und danach bei vorgenannter Temperatur noch 5 min nachgerührt.

Anschließend wurde unter Aufrechterhaltung einer Temperatur von 80 °C der Rest von Zulauf 1 innerhalb von 40 Minuten bei gleichbleibendem Mengenstrom kontinuierlich zudosiert. Danach ließ man das Polymerisationsgemisch noch 10 Minuten bei 80 °C nachreagieren. Daran anschließend wurden zuerst noch 12.0 g entionisiertes Wasser und daran anschließend noch 2,3 g einer 8 gew.-%igen wässrigen Ammoniaklösung zugegeben. Danach wurde innerhalb von 90 Minuten bei gleichbleibendem Mengenstrom Zulauf 2 kontinuierlich zudosiert. 40 Minuten nach Beginn von Zulauf 2 wurden 3,5 g einer 10 gew.-%igen wässrigen Ammoniaklösung zugesetzt. Nach Beendigung von Zulauf 2 ließ man das Polymerisationsgemisch noch 90 Minuten bei 80 °C nachreagieren und setzte dann dem Polymerisationsgemisch 85,1 g entionisiertes Wasser zu. Danach wurde die erhaltenen wässrige Polymerdispersion auf Raumtemperatur abgekühlt und über einen 50 μm Filter filtriert.

Zulauf 1 (homogene Mischung aus):

| | |
|---|---|
| 56,3 g | entionisiertes Wasser, |
| 3,0 g | einer 15 gew.-%igen wässrigen Lösung von Natriumlaurylsulfat, |
| 4,5 g | 2-Mercaptoethansäure-2-ethylhexylester, |
| 10,8 g | Solvesso® 100 [aromatenhaliges organisches Lösungsmittel der Firma Exxon Mobil], |
| 10,8 g | Butylglykol, |
| 30,2 g | n-Butylacrylat, |
| 13,5 g | Styrol, |
| 51,3 g | Methylmethacrylat, |
| 8,6 g | Methacrylsäure, und |
| 32,1 g | 2-Hydroxyethylmethacrylat |

Zulauf 2 (homogene Mischung aus):

| | |
|---|---|
| 69,4 g | entionisiertes Wasser, |
| 6,0 g | einer 15 gew.-%igen wässrigen Lösung von Natriumlaurylsulfat, |
| 1,8 g | 2-Mercaptoethansäure-2-ethylhexylester, |
| 25,2 g | Solvesso 100, |
| 25,2 g | Butylglykol, |
| 150,8 g | n-Butylacrylat, |
| 108,0 g | Methylmethacrylat, und |
| 59,7 g | 2-Hydroxyethylmethacrylat |

Die erhaltene Polymerdispersion wies einen Feststoffgehalt von 41,8 Gew.-% auf. Der gewichtsmittlere Teilchendurchmesser der erhaltenen Dispersionspartikel betrug 134 nm. Die Hydroxyzahl des Dispersionspolymerisats wurde zu 86,2 mg KOH/g bestimmt.

Unmittelbar vor Beginn von Zulauf 2 wurde dem Reaktionsgemisch eine 0,5 ml-Probe entnommen und das gewichtsmittlere Molekulargewicht des Polymers der ersten Polymerisationsstufe zu 10200 g/mol bestimmt. Das erhaltene Gesamtpolymer der Dispersion wies ein gewichtsmittleres Molekulargewicht von 29500 g/mol auf.

Die Hydroxyzahlen der Dispersionspolymerisate wurden generell gemäß DIN 53240-2 (potentiometrisch bei einer Acetylierungszeit von 20 Minuten) bestimmt.

Die Feststoffgehalte wurden generell bestimmt, indem eine definierte Menge der wässrigen Polymerdispersion (ca. 0,8 g) mit Hilfe des Feuchtebestimmers HR73 der Firma Mettler Toledo bei einer Temperatur von 130 °C bis zur Gewichtskonstanz getrocknet wurde. Es werden jeweils zwei Messungen durchgeführt und der Mittelwert dieser beiden Messungen angegeben.

Die gewichtsmittlere Teilchengrößen wurde generell nach ISO 13321 mit einem High Performance Particle Sizer der Fa. Malvern bei 22 °C und einer Wellenlänge von 633 nm bestimmt.

Vergleichsbeispiel 1

Die Herstellung von Vergleichsbeispiel 1 erfolgte völlig analog der Herstellung von Beispiel 1 mit dem Unterschied, dass Zulauf 2 folgende Zusammensetzung aufwies:

Zulauf 2 (homogene Mischung aus):

| | |
|---|---|
| 66,9 g | entionisiertes Wasser, |
| 6,0 g | einer 15 gew.-%igen wässrigen Lösung von Natriumlaurylsulfat, |
| 25,2 g | Solvesso 100 |
| 25,2 g | Butylglykol |
| 150,8 g | n-Butylacrylat, |
| 105,8 g | Methylmethacrylat, und |
| 59,7 g | 2-Hydroxyethylmethacrylat |

Die erhaltene Polymerdispersion wies einen Feststoffgehalt von 41,5 Gew.-% auf. Der gewichtsmittlere Teilchendurchmesser der erhaltenen Dispersionspartikel betrug 153 nm.
Das gewichtsmittlere Molekulargewicht des Polymers der ersten Polymerstufe wurde zu 9900 g/mol bestimmt. Das erhaltene Gesamtpolymer der Dispersion wies ein gewichtsmittleres Molekulargewicht von 90200 g/mol auf. Die Hydroxyzahl des Dispersionspolymerisats wurde zu 84,7 mg KOH/g bestimmt.

Vergleichsbeispiel 2

Die Herstellung von Vergleichsbeispiel 2 erfolgte völlig analog der Herstellung von Beispiel 1 mit dem Unterschied, dass die Zuläufe 1 und 2 folgende Zusammensetzungen aufwiesen:

Zulauf 1 (homogene Mischung aus):

| | |
|---|---|
| 56,3 g | entionisiertes Wasser, |
| 3,0 g | einer 15 gew.-%igen wässrigen Lösung von Natriumlaurylsulfat, |
| 1,4 g | 2-Mercaptoethansäure-2-ethylhexylester, |
| 10,8 g | Solvesso 100, |
| 10,8 g | Butylglykol, |
| 30,2 g | n-Butylacrylat, |
| 13,5 g | Styrol, |
| 51,3 g | Methylmethacrylat, |
| 8,6 g | Methacrylsäure, und |
| 32,1 g | 2-Hydroxyethylmethacrylat |

Zulauf 2 (homogene Mischung aus):

| | |
|---|---|
| 69,4 g | entionisiertes Wasser, |
| 6,0 g | einer 15 gew.-%igen wässrigen Lösung von Natriumlaurylsulfat, |
| 3,6 g | 2-Mercaptoethansäure-2-ethylhexylester, |
| 25,2 g | Solvesso 100, |
| 25,2 g | Butylglykol, |
| 150,8 g | n-Butylacrylat, |
| 108,0 g | Methylmethacrylat, und |
| 59,7 g | 2-Hydroxyethylmethacrylat |

Die erhaltene Polymerdispersion wies einen Feststoffgehalt von 41,8 Gew.-% auf. Der gewichtsmittlere Teilchendurchmesser der erhaltenen Dispersionspartikel betrug 143 nm.
Das gewichtsmittlere Molekulargewicht des Polymers der ersten Polymerstufe wurde zu 43100 g/mol bestimmt. Das erhaltene Gesamtpolymer der Dispersion wies ein gewichtsmittleres Molekulargewicht von 42200 g/mol auf. Die Hydroxyzahl des Dispersionspolymerisats wurde zu 84,8 mg KOH/g bestimmt.

Beispiel 2

Die Herstellung von Beispiel 2 erfolgte völlig analog der Herstellung von Beispiel 1 mit dem Unterschied, dass die Zuläufe 1 und 2 folgende Zusammensetzungen aufwiesen:

Zulauf 1 (homogene Mischung aus):

| | |
|---|---|
| 77,9 g | entionisiertes Wasser, |
| 3,0 g | einer 15 gew.-%igen wässrigen Lösung von Natriumlaurylsulfat, |
| 4,5 g | 2-Mercaptoethansäure-2-ethylhexylester, |
| 30,2 g | n-Butylacrylat, |
| 13,5 g | Styrol, |
| 51,3 g | Methylmethacrylat, |
| 8,6 g | Methacrylsäure, und |
| 32,1 g | 2-Hydroxyethylmethacrylat |

Zulauf 2 (homogene Mischung aus):

| | |
|---|---|
| 119,8 g | entionisiertes Wasser, |
| 1,8 g | 2-Mercaptoethansäure-2-ethylhexylester, |
| 6,0 g | einer 15 gew.-%igen wässrigen Lösung von Natriumlaurylsulfat, |
| 150,8 g | n-Butylacrylat, |
| 105,8 g | Methylmethacrylat, und |
| 59,7 g | 2-Hydroxyethylmethacrylat |

Die erhaltene Polymerdispersion wies einen Feststoffgehalt von 42,1 Gew.-% auf. Der gewichtsmittlere Teilchendurchmesser der erhaltenen Dispersionspartikel betrug 138 nm. Das gewichtsmittlere Molekulargewicht des Polymers der ersten Polymerstufe wurde zu 10300 g/mol bestimmt. Das erhaltene Gesamtpolymer der Dispersion wies ein gewichtsmittleres Molekulargewicht von 36300 g/mol auf. Die Hydroxyzahl des Dispersionspo-lymerisats wurde zu 87,1 mg KOH/g bestimmt.

Vergleichsbeispiel 3

Die Herstellung von Vergleichsbeispiel 3 erfolgte völlig analog der Herstellung von Beispiel 2 mit dem Unterschied, dass die Zuläufe 1 und 2 folgende Zusammensetzungen aufwiesen:

Zulauf 1 (homogene Mischung aus):

| | |
|---|---|
| 77,9 g | entionisiertes Wasser, |
| 3,0 g | einer 15 gew.-%igen wässrigen Lösung von Natriumlaurylsulfat, |
| 4,5 g | 2-Mercaptoethansäure-2-ethylhexylester, |
| 30,2 g | n-Butylacrylat, |
| 13,5 g | Styrol, |
| 51,3 g | Methylmethacrylat, |
| 8,6 g | Methacrylsäure, und |
| 32,1 g | 2-Hydroxyethylmethacrylat |

Zulauf 2 (homogene Mischung aus):

| | |
|---|---|
| 117,3 g | entionisiertes Wasser, |
| 6,0 g | einer 15 gew.-%igen wässrigen Lösung von Natriumlaurylsulfat, |
| 150,8 g | n-Butylacrylat, |
| 105,8 g | Methylmethacrylat, und |
| 59,7 g | 2-Hydroxyethylmethacrylat |

Die erhaltene Polymerdispersion wies einen Feststoffgehalt von 41,8 Gew.-% auf. Der gewichtsmittlere Teilchendurchmesser der erhaltenen Dispersionspartikel betrug 129 nm. Das gewichtsmittlere Molekulargewicht des Polymers der ersten Polymerstufe wurde zu 10600 g/mol bestimmt. Das erhaltene Gesamtpolymer der Dispersion wies ein gewichtsmittleres Molekulargewicht von 216000 g/mol auf. Die Hydroxyzahl des Dispersionspolymerisats wurde zu 85,3

mg KOH/g.

Anwendungsbeispiele

Die in den Beispielen 1 und 2 sowie Vergleichsbeispielen 1, 2 und 3 erhaltenen Polymerdispersionen wurden durch Verdünnen mit entionisiertem Wasser auf einen Feststoffgehalt von 41,0 Gew.-% eingestellt. Von den so erhaltenen wässrigen Polymerdispersionen wurden nach folgender Vorgehensweise wässrige Formulierungen hergestellt.

Formulierungsherstellung:

100,0 g der jeweiligen 41 gew.-%igen wässrigen Polymerdispersion wurden bei Raumtemperatur durch Zugabe von Dimethylethanolamin unter Rühren (600 UPM) auf einen pH-Wert von 8,5 eingestellt. Daran anschließend wurde der jeweils erhaltenen wässrigen Polymerdispersionen unter Rühren jeweils mit 1,0 g Hydropalat® WE 3650 (Verlaufmittel der Firma BASF SE) und 0,3 g EFKA® SL 3035 (Gleiteffektmittel der Firma BASF SE) zugesetzt. Daran anschließend ließ man die jeweilige Polymerdispersion noch weitere 5 Minuten bei 600 UPM nachrühren. Daran anschließend wurde der erhaltenen wässrigen Polymerdispersion insgesamt 20,8 g einer 1:1 (fest/fest) Mischung aus Bayhydur® 3100 (hydrophiles aliphatisches Polyisocyanat auf Basis von Hexamethylendiamin der Firma Bayer MaterialScience) und Desmodur® N 3600 (aliphatisches Polyisocyanat auf Basis von Hexamethylendiamin der Firma Bayer MaterialScience; eingesetzt als 80 gew.-%ige Lösung in Methoxypropylacetat) zugesetzt, wobei zunächst ca. 5 g des Polyisocyanatgemisches unter leichter Erhöhung der Rührdrehzahl auf 800 UPM zugegeben wurde und dann nach 1 Minute der verbliebene Rest des Polyisocyanatgemisches bei einer Drehzahl von 1000 UPM zugegeben wurde. Die jeweils erhaltene Lackformulierung ließ man dann noch 1 Minute bei 1000 UPM nachrühren und setzte danach der Lackformulierung unter Rühren bei 600 UPM noch 3,0 g entionisiertes Wasser zu und rührte noch 1 Minute bei 600 UPM nach. Dabei werden nachfolgend die unter Verwendung der aus Beispiel 1 und Beispiel 2 erhaltenen Lackformulierungen Formulierung 1 und Formulierung 2 und die unter Verwendung der aus den Vergleichsbeispielen 1 bis 3 erhaltenen Lackformulierungen Vergleichsformulierungen 1 bis 3 genannt.

Unmittelbar nach ihrer Herstellung wurden die erhaltenen Formulierungen bzw. Vergleichsformulierungen mit einem 200 µm Rakel auf ein vorlackiertes weißes Aluminiumblech (30 x 10 cm) aufgezogen und 15 Minuten unter Normbedingungen (23 °C, relative Luftfeuchtigkeit 50 %) gelagert. Daran anschließend wurden die erhaltenen beschichteten Aluminiumbleche in einem Trockenschrank für 30 Minuten bei 60 °C getrocknet. Nach dem Abkühlen wurden Glanz und Trübung (Haze) der erhaltenen Lacke gemäß DIN 2813 und DIN 13803 bestimmt. Insgesamt wurden jeweils 5 Messungen an unterschiedlichen Stellen der beschichteten Aluminiumbleche durchgeführt. Die dabei erhaltenen Mittelwerte sind in nachfolgender Tabelle 1 aufgelistet. Dabei sind die Glanzwerte umso besser zu bewerten je höher der jeweilige Wert ist, wohingegen die entsprechenden Trübungswerte (Haze) umso besser zu bewerten sind je niedriger der jeweilige Wert ist.

Tabelle 1: Glanz- und Trübungswerte der erhaltenen Lackformulierungen

| Lackformulierung | Glanz (20°) | Trübung (Haze) |
|---|---|---|
| Formulierung 1 | 78 | 80 |
| Vergleichsformulierung 1 | 56 | 243 |
| Vergleichsformulierung 2 | 44 | 271 |
| Formulierung 2 | 70 | 153 |
| Vergleichsformulierung 3 | 14 | 340 |

Aus den Ergebnissen ist klar ersichtlich, dass die erfindungsgemäßen Lackformulierungen im Vergleich zu den entsprechenden Vergleichsformulierungen deutlich verbesserte Glanz- und Trübungswerte aufweisen.

## Patentansprüche

1. Verfahren zur Herstellung einer wässrigen Polymerdispersion durch radikalisch initiierte wässrige Emulsionspolymerisation, **dadurch gekennzeichnet, dass** in einem wässrigen Polymerisationsmedium

   a) in einer ersten Polymerisationsstufe

| | |
|---|---|
| ≥ 0,1 und ≤ 15 Gew.-% | wenigstens einer α,β-monoethylenisch ungesättigten $C_3$-bis $C_6$-Mono- oder Dicarbonsäure (Monomere A1), |
| ≥ 0,1 und ≤ 40 Gew.-% | wenigstens einer monoethylenisch ungesättigten Verbindung mit wenigstens einer Hydroxygruppe (Monomere B1), |
| ≥ 50 und ≤ 99,8 Gew.-% | wenigstens einer ethylenisch ungesättigten Verbindung, welche sich von den Monomeren A1 und B1 unterscheidet (Monomere C1), |

wobei sich die Mengen der Monomeren A1 bis C1 auf 100 Gew.-% aufsummieren, in Gegenwart mindestens eines Radikalinitiators und mindestens eines Radikalkettenreglers sowie optional in Gegenwart eines Dispergierhilfsmittels polymerisiert werden,
mit der Maßgabe, dass

• die Menge an Radikalkettenregler so gewählt wird, dass das aus der ersten Polymerisationsstufe erhaltene Polymer 1 ein gewichtsmittleres Molekulargewicht im Bereich von ≥ 5000 und ≤ 40000 g/mol aufweist,
• die Art und Mengen der Monomeren A1 bis C1 so gewählt werden, dass das erhaltene Polymer 1 eine Glasübergangstemperatur $Tg^1$ gemessen nach DIN EN ISO 11357-2 (2013-09) im Bereich ≥ 20 °C aufweist,
danach in Anwesenheit des Polymers 1

b) in einer zweiten Polymerisationsstufe

| | |
|---|---|
| ≤ 1,0 Gew.-% | wenigstens einer α,β-monoethylenisch ungesättigten $C_3$-bis $C_6$-Mono- oder Dicarbonsäure (Monomere A2), |
| ≥ 0,1 und ≤ 40 Gew.-% | wenigstens einer monoethylenisch ungesättigten Verbindung mit wenigstens einer Hydroxygruppe(Monomere B2), |
| ≥ 60 und ≤ 99,9 Gew.-% | wenigstens einer ethylenisch ungesättigten Verbindung, welche sich von den Monomeren A2 und B2 unterscheidet (Monomere C2), |

wobei sich die Mengen der Monomeren A2 bis C2 auf 100 Gew.-% aufsummieren, in Gegenwart mindestens eines Radikalinitiators und mindestens eines Radikalkettenreglers sowie optional in Gegenwart eines Dispergierhilfsmittels polymerisiert werden,
mit der Maßgabe, dass

• das Gewichtsverhältnis der Summe der Gesamtmengen an Monomeren A1 bis C1 (Gesamtmonomerenmenge 1) zur Summe der Gesamtmengen an Monomeren A2 bis C2 (Gesamtmonomerenmenge 2) im Bereich 5:95 bis 70:30 liegt,
• die Menge an Radkialkettenregler in der zweiten Polymerisationsstufe so gewählt wird, dass das nach der zweiten Polymerisationsstufe erhaltene Gesamtpolymer ein gewichtsmittleres Molekulargewicht ≤ 75000 g/mol aufweist, und
• die Menge des Dispergierhilfsmittels ≤ 3,0 Gew.-%, bezogen auf die Summe an Gesamtmonomerenmenge 1 und Gesamtmonomerenmenge 2 (Gesamtmonomerenmenge), beträgt.

**2.** Verfahren nach Anspruch 1, **dadurch gekennzeichnet, dass** die Art und Mengen der Monomeren A1 bis C1 so gewählt werden, dass das erhaltene Polymer 1 eine Glasübergangstemperatur $Tg^1$ im Bereich ≥ 30 und ≤ 75 °C aufweist.

**3.** Verfahren nach einem der Ansprüche 1 oder 2, **dadurch gekennzeichnet, dass** die Menge an Radikalkettenregler in der ersten Polymerisationsstufe so gewählt wird, dass das erhaltene Polymer 1 ein gewichtsmittleres Molekulargewicht im Bereich von ≥ 7500 und ≤ 25000 g/mol aufweist

**4.** Verfahren nach einem der Ansprüche 1 bis 3, **dadurch gekennzeichnet, dass** die Menge des Dispergierhilfsmittels ≥ 0,3 und ≤ 0,7 Gew.-%, bezogen auf die Gesamtmonomerenmenge, beträgt.

**5.** Verfahren nach einem der Ansprüche 1 bis 4, **dadurch gekennzeichnet, dass** die Menge an Radikalkettenregler in der zweiten Polymerisationsstufe so gewählt wird, dass das erhaltene Gesamtpolymer ein gewichtsmittleres Molekulargewicht von ≥ 15000 und ≤ 50000 g/mol aufweist.

6. Verfahren nach einem der Ansprüche 1 bis 5, **dadurch gekennzeichnet, dass** in der ersten Polymerisationsstufe

| | |
|---|---|
| ≥ 5 und ≤ 10 Gew.-% | an Monomeren A1, |
| ≥ 15 und ≤ 35 Gew.-% | an Monomere B1, und |
| ≥ 60 und ≤ 80 Gew.-% | an Monomeren C1, |

und in der zweiten Polymerisationsstufe

| | |
|---|---|
| ≤ 0,1 Gew.-% | an Monomeren A2, |
| ≥ 15 und ≤ 35 Gew.-% | an Monomere B2, und |
| ≥ 70 und ≤ 84,9 Gew.-% | an Monomeren C2, |

eingesetzt werden.

7. Verfahren nach einem der Ansprüche 1 bis 6, **dadurch gekennzeichnet, dass** die Monomeren der ersten und der zweiten Polymerisationsstufe jeweils als Monomerengemische eingesetzt werden.

8. Verfahren nach einem der Ansprüche 1 bis 7, **dadurch gekennzeichnet, dass** die erste und/oder die zweite Polymerisationsstufe in Anwesenheit eines organischen Lösungsmittels mit einer Verdunstungszahl ≥ 20, bestimmt nach DIN 53170 (2009-08), erfolgt.

9. Verfahren nach einem der Ansprüche 7 und 8, **dadurch gekennzeichnet, dass** jeweils wenigstens ein Teil der Monomerengemische dem wässrigen Polymerisationsmedium unter Polymerisationsbedingungen zudosiert wird.

10. Verfahren nach einem der Ansprüche 8 und 9, **dadurch gekennzeichnet, dass** die Gesamtmenge des organischen Lösungsmittels ≥ 1 und ≤ 25 Gew.-%, bezogen auf die Gesamtmonomerenmenge, beträgt.

11. Verfahren nach einem der Ansprüche 1 bis 10, **dadurch gekennzeichnet, dass** die erste Polymerisationsstufe in Anwesenheit einer Polymersaat erfolgt.

12. Wässrige Polymerisatdispersion erhältlich nach einem Verfahren gemäß einem der Ansprüche 1 bis 11.

13. Verwendung einer wässrigen Polymerisatdispersion gemäß Anspruch 12 als Bindemittel bei der Herstellung von Klebstoffen, Dichtmassen, Kunstharzputzen, Papierstreichmassen, Faservliesen, flexiblen Dachbeschichtungen und Anstrichmitteln sowie bei der Sandverfestigung, als Komponente bei der Herstellung von Textil- oder Lederhilfsmitteln und Schlagzähmodifier oder zur Modifizierung von mineralischen Bindemitteln und Kunststoffen.

14. Wässrige Formulierung, enthaltend eine wässrige Polymerisatdispersion gemäß Anspruch 12 und wenigstens eine Komponente ausgewählt aus der Gruppe umfassend Polyisocyanat, Melamin-Formaldehyd-Harz und Harnstoff-Formaldehyd-Harz.

15. Verwendung einer wässrigen Formulierung gemäß Anspruch 14 als Komponente bei der Herstellung von Beschichtungsformulierungen.

## Claims

1. A process for preparing an aqueous polymer dispersion by radically initiated aqueous emulsion polymerization, which comprises polymerizing, in an aqueous polymerization medium

a) in a first polymerization stage

| | |
|---|---|
| ≥ 0.1 and ≤ 15 wt% | of at least one $\alpha,\beta$-monoethylenically unsaturated $C_3$ to $C_6$ monocarboxylic or dicarboxylic acid (monomers A1), |
| ≥ 0.1 and ≤ 40 wt% | of at least one monoethylenically unsaturated compound having at least one hydroxyl group (monomers B1), |

(continued)

| | |
|---|---|
| ≥ 50 and ≤ 99.8 wt% | of at least one ethylenically unsaturated compound which is different from the monomers A1 and B1 (monomers C1), |

the amounts of the monomers A1 to C1 adding up to 100 wt%, in the presence of at least one radical initiator and at least one chain transfer agent, and also, optionally, in the presence of a dispersing assistant,
with the provisos that

- the amount of chain transfer agent is selected such that the polymer 1 obtained from the first polymerization stage has a weight-average molecular weight in the range of ≥ 5000 and ≤ 40 000 g/mol,
- the nature and amounts of the monomers A1 to C1 are selected such that the resulting polymer 1 has a glass transition temperature $Tg^1$ as measured to DIN EN ISO 11357-2 (2013-09) in the range ≥ 20°C, and thereafter polymerizing, in the presence of the polymer 1

b) in a second polymerization stage

| | |
|---|---|
| ≤ 1.0 wt% | of at least one α,β-monoethylenically unsaturated $C_3$ to $C_6$ monocarboxylic or dicarboxylic acid (monomers A2), |
| ≥ 0.1 and ≤ 40 wt% | of at least one monoethylenically unsaturated compound having at least one hydroxyl group (monomers B2), |
| ≥ 60 and ≤ 99.9 wt% | of at least one ethylenically unsaturated compound which is different from the monomers A2 and B2 (monomers C2), |

the amounts of the monomers A2 to C2 adding up to 100 wt%, in the presence of at least one radical initiator and at least one chain transfer agent, and also, optionally, in the presence of a dispersing assistant,
with the provisos that

- the weight ratio of the sum of the total amounts of monomers A1 to C1 (total monomer amount 1) to the sum of the total amounts of monomers A2 to C2 (total monomer amount 2) is in the range 5:95 to 70:30,
- the amount of chain transfer agent in the second polymerization stage is selected such that the overall polymer obtained after the second polymerization stage has a weight-average molecular weight ≤ 75 000 g/mol, and
- the amount of the dispersing assistant is ≤ 3.0 wt%, based on the sum of total monomer amount 1 and total monomer amount 2 (total monomer amount).

**2.** The process according to claim 1, wherein the nature and amounts of the monomers A1 to C1 are selected such that the resulting polymer 1 has a glass transition temperature $Tg^1$ in the range ≥ 30 and ≤ 75°C.

**3.** The process according to either of claims 1 and 2, wherein the amount of chain transfer agent in the first polymerization stage is selected such that the resulting polymer 1 has a weight-average molecular weight in the range of ≥ 7500 and ≤ 25 000 g/mol.

**4.** The process according to any of claims 1 to 3, wherein the amount of the dispersing assistant is ≥ 0.3 and ≤ 0.7 wt%, based on the total monomer amount.

**5.** The process according to any of claims 1 to 4, wherein the amount of chain transfer agent in the second polymerization stage is selected such that the resulting overall polymer has a weight-average molecular weight of ≥ 15 000 and ≤ 50 000 g/mol.

**6.** The process according to any of claims 1 to 5, wherein the first polymerization stage uses

| | |
|---|---|
| ≥ 5 and ≤ 10 wt% | of monomers A1, |
| ≥ 15 and ≤ 35 wt% | of monomers B1, and |
| ≥ 60 and ≤ 80 wt% | of monomers C1, |

and the second polymerization stage uses

| | |
|---|---|
| $\leq$ 0.1 wt% | of monomers A2, |
| $\geq$ 15 and $\leq$ 35 wt% | of monomers B2, and |
| $\geq$ 70 and $\leq$ 84.9 wt% | of monomers C2. |

**7.** The process according to any of claims 1 to 6, wherein the monomers of the first and second polymerization stages are each used as monomer mixtures.

**8.** The process according to any of claims 1 to 7, wherein the first and/or second polymerization stages take place in the presence of an organic solvent having an evaporation number $\geq$ 20, as determined to DIN 53170 (2009-08).

**9.** The process according to either of claims 7 and 8, wherein at least part of the monomer mixtures in each case is metered into the aqueous polymerization medium under polymerization conditions.

**10.** The process according to either of claims 8 and 9, wherein the total amount of the organic solvent is $\geq$ 1 and $\leq$ 25 wt%, based on the total monomer amount.

**11.** The process according to any of claims 1 to 10, wherein the first polymerization stage takes place in the presence of a polymer seed.

**12.** An aqueous polymer dispersion obtainable by a process according to any of claims 1 to 11.

**13.** The use of an aqueous polymer dispersion according to claim 12 as binder in the production of adhesives, sealants, synthetic resin renders, papercoating slips, nonwoven fiber webs, flexible roof coatings, and paints and varnishes, and also in sand consolidation, as a component in the production of textile assistants or leather assistants, and impact modifier, or for the modification of mineral binders and plastics.

**14.** An aqueous formulation comprising an aqueous polymer dispersion according to claim 12 and at least one component selected from the group comprising polyisocyanate, melamine-formaldehyde resin, and urea-formaldehyde resin.

**15.** The use of an aqueous formulation according to claim 14 as a component in the production of coating formulations.

## Revendications

**1.** Procédé de fabrication d'une dispersion aqueuse de polymère par polymérisation en émulsion aqueuse initiée par voie radicalaire, **caractérisé en ce que**, dans un milieu de polymérisation aqueux,

a) lors d'une première étape de polymérisation,
$\geq$ 0,1 et $\leq$ 15 % en poids d'au moins un acide mono- ou dicarboxylique en $C_3$ à $C_6$ $\alpha,\beta$-monoéthyléniquement insaturé (monomères A1),
$\geq$ 0,1 et $\leq$ 40 % en poids d'au moins un composé monoéthyléniquement insaturé contenant au moins un groupe hydroxy (monomères B1),
$\geq$ 50 et $\leq$ 99,8 % en poids d'au moins un composé éthyléniquement insaturé, qui diffère des monomères A1 et B1 (monomères C1),
la somme des quantités des monomères A1 à C1 étant de 100 % en poids, sont polymérisés en présence d'au moins un initiateur radicalaire et d'au moins un régulateur de chaîne radicalaire, ainsi qu'éventuellement en présence d'un adjuvant de dispersion,
à condition que

- la quantité du régulateur de chaîne radicalaire soit choisie de telle sorte que le polymère 1 obtenu à l'issu de la première étape de polymérisation présente un poids moléculaire moyen en poids dans la plage $\geq$ 5 000 et $\leq$ 40 000 g/mol,
- le type et les quantités des monomères A1 à C1 soient choisis de telle sorte que le polymère 1 obtenu présente une température de transition vitreuse $Tg^1$ mesurée selon DIN EN ISO 11357-2 (2013-09) dans

la plage ≥ 20 °C, puis, en présence du polymère 1,

b) lors d'une deuxième étape de polymérisation,
≤ 1,0 % en poids d'au moins un acide mono- ou dicarboxylique en $C_3$ à $C_6$ $\alpha,\beta$-monoéthyléniquement insaturé (monomères A2),
≥ 0,1 et ≤ 40 % en poids d'au moins un composé monoéthyléniquement insaturé contenant au moins un groupe hydroxy (monomères B2),
≥ 60 et ≤ 99,9 % en poids d'au moins un composé éthyléniquement insaturé, qui diffère des monomères A2 et B2 (monomères C2),
la somme des quantités des monomères A2 à C2 étant de 100 % en poids, sont polymérisés en présence d'au moins un initiateur radicalaire et d'au moins un régulateur de chaîne radicalaire, ainsi qu'éventuellement en présence d'un adjuvant de dispersion,
à condition que

- le rapport en poids entre la somme des quantités totales de monomères A1 à C1 (quantité de monomères totale 1) et la somme des quantités totales de monomères A2 à C2 (quantité de monomères totale 2) se situe dans la plage allant de 5:95 à 70:30,
- la quantité de régulateur de chaîne radicalaire lors de la deuxième étape de polymérisation soit choisie de telle sorte que le polymère total obtenu après la deuxième étape de polymérisation présente un poids moléculaire moyen en poids ≤ 75 000 g/mol, et
- la quantité de l'adjuvant de dispersion soit ≤ 3,0 % en poids, par rapport à la somme de la quantité de monomères totale 1 et de la quantité de monomères totale 2 (quantité de monomères totale).

**2.** Procédé selon la revendication 1, **caractérisé en ce que** le type et les quantités des monomères A1 à C1 sont choisis de telle sorte que le polymère 1 obtenu présente une température de transition vitreuse $Tg^1$ dans la plage ≥ 30 et ≤ 75 °C.

**3.** Procédé selon l'une quelconque des revendications 1 ou 2, **caractérisé en ce que** la quantité de régulateur de chaîne radicalaire lors de la première étape de polymérisation est choisie de telle sorte que le polymère 1 obtenu présente un poids moléculaire moyen en poids dans la plage ≥ 7 500 et ≤ 25 000 g/mol.

**4.** Procédé selon l'une quelconque des revendications 1 à 3, **caractérisé en ce que** la quantité de l'adjuvant de dispersion est ≥ 0,3 et ≤ 0,7 % en poids, par rapport à la quantité de monomères totale.

**5.** Procédé selon l'une quelconque des revendications 1 à 4, **caractérisé en ce que** la quantité du régulateur de chaîne radicalaire lors de la deuxième étape de polymérisation est choisie de telle sorte que le polymère total obtenu présente un poids moléculaire moyen en poids ≥ 15 000 et ≤ 50 000 g/mol.

**6.** Procédé selon l'une quelconque des revendications 1 à 5, **caractérisé en ce que**, lors de la première étape de polymérisation,
≥ 5 et ≤ 10 % en poids de monomères A1,
≥ 15 et ≤ 35 % en poids de monomères B1 et
≥ 60 et ≤ 80 % en poids de monomères C1,
et lors de la deuxième étape de polymérisation,
≤ 0,1 % en poids de monomères A2,
≥ 15 et ≤ 35 % en poids de monomères B2, et
≥ 70 et ≤ 84,9 % en poids de monomères C2,
sont utilisés.

**7.** Procédé selon l'une quelconque des revendications 1 à 6, **caractérisé en ce que** les monomères de la première et de la deuxième étape de polymérisation sont utilisés à chaque fois sous la forme de mélanges de monomères.

**8.** Procédé selon l'une quelconque des revendications 1 à 7, **caractérisé en ce que** la première et/ou la deuxième étape de polymérisation ont lieu en présence d'un solvant organique ayant un indice d'évaporation ≥ 20, déterminé selon DIN 53170 (2009-08).

**9.** Procédé selon l'une quelconque des revendications 7 et 8, **caractérisé en ce qu'**à chaque fois au moins une partie du mélange de monomères est ajoutée au milieu de polymérisation aqueux dans les conditions de polymérisation.

**10.** Procédé selon l'une quelconque des revendications 8 et 9, **caractérisé en ce que** la quantité totale du solvant organique est ≥ 1 et ≤ 25 % en poids, par rapport à la quantité de monomères totale.

**11.** Procédé selon l'une quelconque des revendications 1 à 10, **caractérisé en ce que** la première étape de polymérisation a lieu en présence d'un germe polymère.

**12.** Dispersion aqueuse de polymère pouvant être obtenue par un procédé selon l'une quelconque des revendications 1 à 11.

**13.** Utilisation d'une dispersion aqueuse de polymère selon la revendication 12 en tant que liant lors de la fabrication d'adhésifs, de matériaux d'étanchéité, d'enduits de résines synthétiques, de masses de couchage de papier, des non-tissés fibreux, de revêtements de toits flexibles et de peintures, ainsi que lors de la consolidation de sable, en tant que composant lors de la fabrication d'adjuvants pour textiles ou cuir, et modificateurs de la résistance aux impacts, ou pour la modification de liants minéraux et de plastiques.

**14.** Formulation aqueuse, contenant une dispersion aqueuse de polymère selon la revendication 12 et au moins un composant choisi dans le groupe comprenant le polyisocyanate, une résine de mélamine-formaldéhyde et une résine d'urée-formaldéhyde.

**15.** Utilisation d'une formulation aqueuse selon la revendication 14 en tant que composant lors de la fabrication de formulations de revêtement.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2011073341 A
- WO 2011080067 A
- WO 2012130712 A
- WO 2012140042 A
- EP 2371870 A
- EP 1978043 A
- EP 14175337 A
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- US 4269749 A
- US 2520959 A
- US 3397165 A
- EP 126299 A
- US 4596678 A
- EP 126300 A
- US 4596679 A
- EP 355443 A
- US 5087739 A
- DE 10013186 A
- DE 10013187 A
- WO 200868198 A
- WO 2005087828 A


### In der Beschreibung aufgeführte Nicht-Patentliteratur


- *Polymer Science and Engineering,* 1987, vol. 8, 659 ff
- **D.C. BLACKLEY.** *High Polymer Latices,* 1966, vol. 1, 35 ff
- **H. WARSON.** The Applications of Synthetic Resin Emulsions. 1972, 246 ff
- **D. DIEDERICH.** *Chemie in unserer Zeit 24,* 1990, 135-142
- Emulsion Polymerisation. Interscience Publishers, 1965
- **F. HÖLSCHER.** Dispersionen synthetischer Hochpolymerer. Springer-Verlag, 1969
- **J. BRANDRUP ; E.H. IMMERGUT.** Polymerhandbook. John Wiley & Sons, 1989, 133-141
- Makromolekulare Stoffe. **HOUBEN-WEYL.** Methoden der organischen Chemie. Georg-Thieme-Verlag, 1961, vol. XIV/1, 411-420
- Makromolekulare Stoffe. **HOUBEN-WEYL.** Methoden der organischen Chemie. Georg-Thieme-Verlag, 1961, vol. XIV/1, 192-208
- **T.G. FOX.** *Bull. Am. Phys. Soc.,* 1956, vol. 1, 123
- Ullmann’s Encyclopädie der technischen Chemie. Verlag Chemie, 1980, vol. 19, 18, , 4
- **J. BRANDRUP ; E.H. IMMERGUT.** Polymer Handbook. J. Wiley, 1966
- POLYMER HANBOOK. J. Wiley, 1975
- POLYMER HANBOOK. J. Wiley, 1989
- Ullmann’s Cncyclopedia of Industrial Chemistry. Verlag Chemie, 1992, 169
- An industrial Guide. Corrosion Inhibitors. William Andrew Inc
- Ullmanns Enzyklopädie der technischen Chemie. vol. 19, 62-65